(19) Europäisches Patentamt
European Patent Office
Office européen des brevets

(11) **EP 4 697 504 A1**

(12) **EUROPEAN PATENT APPLICATION**
published in accordance with Art. 153(4) EPC

(43) Date of publication:
**18.02.2026 Bulletin 2026/08**

(21) Application number: **23938429.0**

(22) Date of filing: **23.05.2023**

(51) International Patent Classification (IPC):
***H01Q 21/24*** (2006.01)

(52) Cooperative Patent Classification (CPC):
**H01Q 21/24**

(86) International application number:
**PCT/JP2023/019038**

(87) International publication number:
**WO 2024/241458 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mitsubishi Electric Corporation**
**Chiyoda-ku**
**Tokyo 100-8310 (JP)**

(72) Inventors:
• **NAKAMOTO, Narihiro**
**Tokyo 100-8310 (JP)**
• **TAKAHASHI, Tomohiro**
**Tokyo 100-8310 (JP)**
• **TAKAHASHI, Toru**
**Tokyo 100-8310 (JP)**

(74) Representative: **Mewburn Ellis LLP**
**Aurora Building**
**Counterslip**
**Bristol BS1 6BX (GB)**

(54) **CIRCULAR POLARIZATION ANTENNA DEVICE AND CORRECTION CONTROL AMOUNT DETERMINATION METHOD**

(57)    A circular polarization antenna device (1) includes: a correction control amount calculating unit (11) that calculates a correction control amount for axial ratio correction on the basis of a function representing a shape of an emission pattern of a high-frequency signal emitted from an antenna element (2) and a coupling amount between a first feeding terminal (2-1) and a second feeding terminal (2-2); an amplitude adjustment controlling unit (7) that controls amplitude adjustment performed by a first amplitude adjusting circuit (3-1) and a second amplitude adjusting circuit (3-2) on the basis of the correction control amount; and a phase shifter controlling unit (8) that controls phase adjustment performed by a first phase shifter (4-1) and a second phase shifter (4-2) on the basis of the correction control amount.

FIG. 1

**Description**

TECHNICAL FIELD

The present disclosure relates to a circular polarization antenna device and a correction control amount determining method.

BACKGROUND ART

The circular polarization antenna device is an antenna device designed in such a manner that a polarization direction of a radio wave to be transmitted and received is circular. The circular polarization antenna device is used in various fields such as satellite communication and microwave power transmission because a transmission and reception antenna is more multidirectional than a longitudinally polarization antenna and a laterally polarization antenna and does not require adjustment of a polarization direction. One of the circular polarization antenna devices is an electronic scanning type circular polarization phased array antenna. The circular polarization phased array antenna is a phased array antenna capable of controlling a polarization direction, and can transmit and receive radio waves to and from a mobile object whose position changes by movement or various positions, or transmit power.

In general, the circular polarization antenna device has a good emission pattern of a circular polarization component, that is, a low axial ratio characteristic in an antenna front direction or in the vicinity thereof, and has a tendency that a cross polarization component increases and the axial ratio deteriorates in a wide angle direction. For example, when beam scanning is performed in a wide angle direction in the circular polarization phased array antenna, a cross polarization component may increase, and communication quality or power transmission efficiency may deteriorate. As a conventional technique for solving this problem, for example, there is an antenna described in Patent Literature 1.

The antenna described in Patent Literature 1 includes a set of feeding antenna elements, a finite length reflector on which the feeding antenna elements are mounted, and a feeding circuit including a phase shifter for giving a phase difference between the feeding antenna elements, a phase shifter for giving an excitation amplitude to each of the feeding antenna elements, and a set of hybrids. By adjusting the two phase shifters, a desired excitation current amplitude ratio and a desired phase difference for the feeding antenna elements can be obtained, an incoming wave of a desired circular polarization can be effectively received, and meanwhile, any polarization having a desired axial ratio can be combined in a specified direction in such a manner as not to receive an unnecessary elliptically polarization.

CITATION LIST

PATENT LITERATURE

Patent Literature 1: JP S59-75704 A

SUMMARY OF INVENTION

TECHNICAL PROBLEM

In a conventional circular polarization antenna device, an emission pattern changes by re-emission from an adjacent antenna element, and therefore there is a problem that a correction control amount with which an axial ratio is improved cannot be determined. For example, the circular polarization antenna device described in Patent Literature 1 assumes a pair of dipole antennas arranged orthogonally to each other as a set of feeding antenna elements. For example, in a case of a two-point feeding patch antenna instead of the pair of dipole antennas, mutual coupling between feeding points has a non-negligible magnitude. As a result, in the conventional circular polarization antenna device, an emission pattern changes by re-emission from an adjacent antenna element, and therefore a correction control amount with which an axial ratio is improved cannot be determined.

In addition, similarly to Patent Literature 1, in a circular polarization phased array antenna in which a plurality of antenna elements as a pair of dipole antennas is arranged, the dipole antennas are not arranged orthogonally to each other between adjacent antenna elements. For this reason, mutual coupling between the antenna elements has a non-negligible magnitude, an emission pattern changes by re-emission from an adjacent antenna element, and a correction control amount with which an axial ratio is improved cannot be determined.

The present disclosure solves the above problem, and an object of the present disclosure is to obtain a circular polarization antenna device capable of determining a correction control amount with which an axial ratio is improved.

SOLUTION TO PROBLEM

A circular polarization antenna device according to the present disclosure includes: an antenna element including a first feeding terminal that transmits and receives a high-frequency signal of circular polarization and a second feeding terminal that transmits and receives a high-frequency signal of main polarization orthogonal to a main polarization component of the high-frequency signal; a first amplitude adjusting circuit that adjusts an amplitude of the high-frequency signal transmitted and received via the first feeding terminal; a second amplitude adjusting circuit that adjusts an amplitude of the high-frequency signal transmitted and received via the second feeding terminal; a first phase shifter that adjusts a phase of the high-frequency signal input to and output from the first amplitude adjusting circuit; a second phase shifter that adjusts a phase of the high-frequency signal input to and output from the second amplitude adjusting circuit; and a distribution and combination circuit that distributes the high-frequency signals to the first phase shifter and the second phase shifter, and combines the high-frequency signals from the first phase shifter and the second phase shifter, and further includes: a correction control amount calculating unit that calculates a correction control amount for axial ratio correction on the basis of a function representing a shape of an emission pattern of the high-frequency signal emitted from the antenna element via each of the first feeding terminal and the second feeding terminal and a coupling amount between the first feeding terminal and the second feeding terminal; an amplitude adjustment controlling unit that controls amplitude adjustment performed by the first amplitude adjusting circuit and the second amplitude adjusting circuit on the basis of the correction control amount; and a phase shifter controlling unit that controls phase adjustment performed by the first phase shifter and the second phase shifter on the basis of the correction control amount.

ADVANTAGEOUS EFFECTS OF INVENTION

According to the present disclosure, a correction control amount for axial ratio correction is calculated on the basis of a function representing a shape of an emission pattern of a high-frequency signal emitted from an antenna element via each of a first feeding terminal and a second feeding terminal and a coupling amount between the first feeding terminal and the second feeding terminal, amplitude adjustment performed by a first amplitude adjusting circuit and a second amplitude adjusting circuit is controlled on the basis of the correction control amount, and phase adjustment performed by a first phase shifter and a second phase shifter is controlled on the basis of the correction control amount. As a result, the circular polarization antenna device according to the present disclosure can determine a correction control amount with which an axial ratio is improved.

BRIEF DESCRIPTION OF DRAWINGS

FIG. 1 is a block diagram illustrating a configuration of a circular polarization antenna device according to a first embodiment.
FIG. 2 is a flowchart illustrating a correction control amount determining method according to the first embodiment.
FIG. 3 is a block diagram illustrating a hardware configuration for implementing a function of the circular polarization antenna device according to the first embodiment.
FIG. 4 is a block diagram illustrating a configuration of a circular polarization antenna device according to a second embodiment.
FIG. 5 is a flowchart illustrating a correction control amount determining method according to the second embodiment.
FIG. 6 is a block diagram illustrating a configuration of a circular polarization antenna device according to a third embodiment.

DESCRIPTION OF EMBODIMENTS

First Embodiment

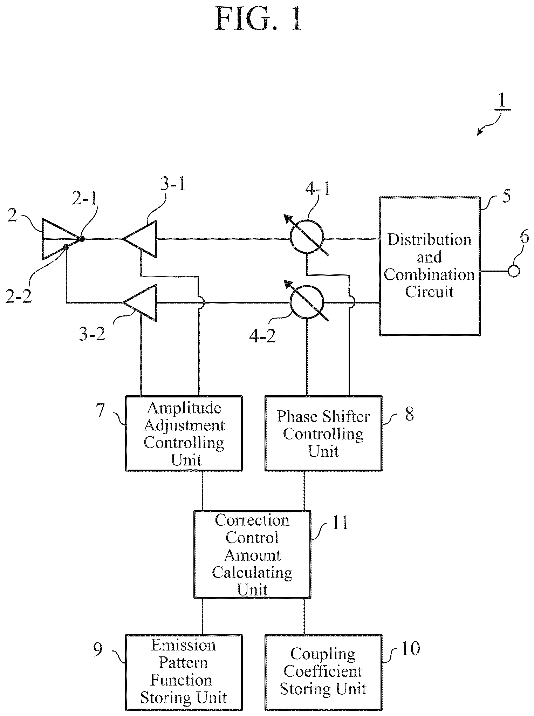

FIG. 1 is a block diagram illustrating a configuration of a circular polarization antenna device 1 according to a first embodiment. In FIG. 1, the circular polarization antenna device 1 is an antenna device that transmits and receives a high-frequency signal of circular polarization. The circular polarization antenna device 1 includes an antenna element 2, a first amplitude adjusting circuit 3-1, a second amplitude adjusting circuit 3-2, a first phase shifter 4-1, a second phase shifter 4-2, a distribution and combination circuit 5, an input and output terminal 6, an amplitude adjustment controlling unit 7, a phase shifter controlling unit 8, an emission pattern function storing unit 9, a coupling coefficient storing unit 10, and a correction control amount calculating unit 11. The antenna element 2 includes a first feeding terminal 2-1 and a second feeding terminal 2-2.

The antenna element 2 is an emission element capable of emitting or receiving radio waves having respective two orthogonal polarization characteristics. For example, the antenna element 2 is a pair of emission elements constituted by a first emission element and a second emission element, and the first emission element and the second emission element are circular or rectangular patch antennas, a pair of dipole antennas arranged orthogonally to each other, or the like.

The first feeding terminal 2-1 is a feeding terminal included in the antenna element 2, and the second feeding terminal 2-2 is a feeding terminal disposed at a position different from that of the first feeding terminal 2-1 in the antenna element 2. The first feeding terminal 2-1 and the second feeding terminal 2-2 are arranged in such a manner that a main polarization component of a radio wave emitted or received by the first emission element via the first feeding terminal 2-1 is orthogonal to a main polarization component of a radio wave emitted or received by the second emission element via the second feeding terminal 2-2.

The first amplitude adjusting circuit 3-1 is a circuit that adjusts an amplitude of a high-frequency signal transmitted and received via the first feeding terminal 2-1, and the second amplitude adjusting circuit 3-2 is a circuit that adjusts an amplitude of a high-frequency signal transmitted and received via the second feeding terminal 2-2. Each of the first amplitude adjusting circuit 3-1 and the second amplitude adjusting circuit 3-2 is constituted by, for example, a variable amplifier, or an amplifier and a variable attenuator.

The first phase shifter 4-1 is a circuit that adjusts a phase of a high-frequency signal input to and output from the first amplitude adjusting circuit 3-1, and the second phase shifter 4-2 is a circuit that adjusts a phase of a high-frequency signal input to and output from the second amplitude adjusting circuit 3-2. Each of the first phase shifter 4-1 and the second phase shifter 4-2 is, for example, constituted by a phase shift circuit that changes a phase of a signal using an element such as a capacitor or an inductor, or constituted by a phase comparator loop (PLL) that compares phases of signals and changes the phases of the signals using a difference therebetween.

The distribution and combination circuit 5 is a circuit that distributes high-frequency signals to the first phase shifter 4-1 and the second phase shifter 4-2 and combines high-frequency signals from the first phase shifter 4-1 and the second phase shifter 4-2. As illustrated in FIG. 1, the distribution and combination circuit 5 is connected to the input and output terminal 6 to/from which a high-frequency signal is input and output, separately from the first phase shifter 4-1 and the second phase shifter 4-2.

The amplitude adjustment controlling unit 7 controls amplitude adjustment performed by the first amplitude adjusting circuit 3-1 and the second amplitude adjusting circuit 3-2 on the basis of a correction control amount related to an amplitude of a high-frequency signal calculated by the correction control amount calculating unit 11. For example, the amplitude adjustment controlling unit 7 generates a control signal for controlling the amount of the amplitude adjustment performed by the first amplitude adjusting circuit 3-1 and the second amplitude adjusting circuit 3-2 to be a predetermined value, and outputs the generated control signal to each of the first amplitude adjusting circuit 3-1 and the second amplitude adjusting circuit 3-2.

The phase shifter controlling unit 8 controls phase adjustment performed by the first phase shifter 4-1 and the second phase shifter 4-2 on the basis of a correction control amount related to a phase of a high-frequency signal calculated by the correction control amount calculating unit 11. For example, the phase shifter controlling unit 8 generates a control signal for controlling the amount of the phase adjustment performed by the first phase shifter 4-1 and the second phase shifter 4-2 to be a predetermined value, and outputs the generated control signal to each of the first phase shifter 4-1 and the second phase shifter 4-2.

The emission pattern function storing unit 9 is a storage unit that stores a function representing a shape of an emission pattern of a high-frequency signal emitted from the antenna element 2 via each of the first feeding terminal 2-1 and the second feeding terminal 2-2. For example, the function representing a shape of an emission pattern of a high-frequency signal is a function representing a shape of an electric field emission pattern emitted from the antenna element 2 when power is independently fed to each of the first feeding terminal 2-1 and the second feeding terminal 2-2 at a predetermined reference amplitude and a predetermined reference phase.

The coupling coefficient storing unit 10 is a storage unit that stores a coupling amount between the first feeding terminal 2-1 and the second feeding terminal 2-2. This coupling amount represents an amplitude and a phase of a high-frequency signal corresponding to a coupling amount between the first feeding terminal 2-1 and the second feeding terminal 2-2.

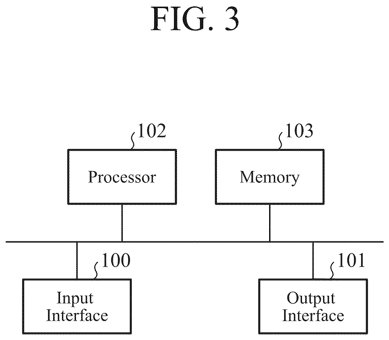

The emission pattern function storing unit 9 and the coupling coefficient storing unit 10 are, for example, memories 103 described later with reference to FIG. 3. Note that the emission pattern function storing unit 9 and the coupling coefficient storing unit 10 only need to be accessible by the correction control amount calculating unit 11 included in the circular polarization antenna device 1, and may be disposed outside the circular polarization antenna device 1.

The correction control amount calculating unit 11 calculates a correction control amount for axial ratio correction on the basis of a function representing a shape of an emission pattern of a high-frequency signal emitted from the antenna element 2 via each of the first feeding terminal 2-1 and the second feeding terminal 2-2 and a coupling amount between the first feeding terminal 2-1 and the second feeding terminal 2-2.

For example, the correction control amount calculating unit 11 reads, from the emission pattern function storing unit 9, a function representing a shape of an emission pattern of a high-frequency signal emitted from the antenna element 2 via the first feeding terminal 2-1 and a function representing a shape of an emission pattern of a high-frequency signal emitted from the antenna element 2 via the second feeding terminal 2-2, and reads the coupling amount from the coupling coefficient storing unit 10. In addition to these pieces of information, the correction control amount calculating unit 11 calculates a correction control amount related to an amplitude of a high-frequency signal necessary for axial ratio correction and a correction control amount related to a phase according to a correction control amount calculating equation using preset information regarding a frequency of a high-frequency signal, an axial ratio correction direction, and an excitation polarization condition.

Then, the correction control amount calculating unit 11 outputs a correction control amount related to an amplitude of a high-frequency signal emitted from the antenna element 2 via the first feeding terminal 2-1 to the first amplitude adjusting circuit 3-1, and outputs a correction control amount related to an amplitude of a high-frequency signal emitted from the antenna element 2 via the second feeding terminal 2-2 to the second amplitude adjusting circuit 3-2. Furthermore, the correction control amount calculating unit 11 outputs a correction control amount related to a phase of a high-frequency signal input to and output from the first amplitude adjusting circuit 3-1 to the first phase shifter 4-1, and outputs a correction control amount related to a phase of a high-frequency signal input to and output from the second amplitude adjusting circuit 3-2 to the second phase shifter 4-2.

Next, operation of the circular polarization antenna device 1 functioning as a transmission antenna will be described.

First, the distribution and combination circuit 5 distributes high-frequency signals input to the input and output terminal 6 to high-frequency signals having approximately equal amplitudes and an equal phase, and outputs the high-frequency signals to the first phase shifter 4-1 and the second phase shifter 4-2. The first phase shifter 4-1 adjusts the phase of the high-frequency signal input from the distribution and combination circuit 5 according to the control signal input from the phase shifter controlling unit 8, and outputs the high-frequency signal having the adjusted phase to the first amplitude adjusting circuit 3-1. Similarly, the second phase shifter 4-2 adjusts the phase of the high-frequency signal input from the distribution and combination circuit 5 according to the control signal input from the phase shifter controlling unit 8, and outputs the high-frequency signal having the adjusted phase to the second amplitude adjusting circuit 3-2.

The first amplitude adjusting circuit 3-1 adjusts the amplitude of the high-frequency signal input from the first phase shifter 4-1 according to the control signal input from the amplitude adjustment controlling unit 7, and outputs the high-frequency signal having the adjusted amplitude to the antenna element 2 via the first feeding terminal 2-1. Similarly, the second amplitude adjusting circuit 3-2 adjusts the amplitude of the high-frequency signal input from the second phase shifter 4-2 according to the control signal input from the amplitude adjustment controlling unit 7, and outputs the high-frequency signal having the adjusted amplitude to the antenna element 2 via the second feeding terminal 2-2.

The high-frequency signals input to the antenna element 2 via the first feeding terminal 2-1 and the second feeding terminal 2-2 are emitted to an external space as radio waves. A main polarization component of a radio wave emitted from the antenna element 2 via the first feeding terminal 2-1 and a main polarization component of a radio wave emitted from the antenna element 2 via the second feeding terminal 2-2 are orthogonal to each other. By adjusting an amplitude and a phase of a high-frequency signal passing through the first amplitude adjusting circuit 3-1 and the first phase shifter 4-1 and adjusting an amplitude and a phase of a high-frequency signal passing through the second amplitude adjusting circuit 3-2 and the second phase shifter 4-2, it is possible to perform control in such a manner that the high-frequency signals of these two orthogonal polarization components have an equal amplitude and a phase difference of 90 degrees, and it is possible to achieve good circular polarization characteristics.

For example, when power is fed to the first feeding terminal 2-1 at a predetermined reference amplitude and a predetermined reference phase in a spherical coordinate system with a center of the antenna element 2 as an origin, signals of polarization components of an electric field in $(\theta, \varphi)$ directions, emitted from the antenna element 2 are represented by $E_{\theta 1}(\theta, \varphi)$ and $E_{\varphi 1}(\theta, \varphi)$.

Here, the subscript $\theta$ represents a signal of a linear polarization component in a $\theta$ direction, the subscript $\varphi$ represents a signal of a linear polarization component in a $\varphi$ direction, and these signals are signals of linear polarization components orthogonal to each other. Furthermore, each of these signals does not include a re-emission component caused by mutual coupling with the second feeding terminal 2-2. Similarly, when power is fed to the second feeding terminal 2-2 at a predetermined reference amplitude and a predetermined reference phase, polarization components of an electric field in $(\theta, \varphi)$ directions, emitted from the antenna element 2 are represented by $E_{\theta 2}(\theta, \varphi)$ and $E_{\varphi 2}(\theta, \varphi)$. Hereinafter, in order to simplify expression, an argument $(\theta, \varphi)$ of each polarization component of an electric field is omitted. Each of these signals does not include a re-emission component caused by mutual coupling with the first feeding terminal 2-1.

$E_{\theta 1}$, $E_{\varphi 1}$, $E_{\theta 2}$, and $E_{\varphi 2}$ are functions of $(\theta, \varphi)$ representing a shape of an electric field emission pattern expressed by a trigonometric function, a Bessel function, or a Hankel function, and are obtained in advance by performing emission pattern measurement, electromagnetic field analysis, theoretical analysis, or the like. $E_{\theta 1}$, $E_{\varphi 1}$, $E_{\theta 2}$, and $E_{\theta 2}$ are stored in the emission pattern function storing unit 9.

The first amplitude adjusting circuit 3-1 multiplies an amplitude, which is a reference amplitude, of a high-frequency signal by $A_1$, and the second amplitude adjusting circuit 3-2 multiplies an amplitude, which is a reference amplitude, of a high-frequency signal by $A_2$. The first phase shifter 4-1 shifts a phase, which is a reference phase, of a high-frequency signal by $\psi_1$, and the second phase shifter 4-2 shifts a phase, which is a reference phase, of a high-frequency signal by $\psi_2$. In these cases, an electric field emitted from the antenna element 2 is considered.

The electric field to be emitted can be obtained by considering a re-emission component caused by mutual coupling between the first feeding terminal 2-1 and the second power feeding terminal 2-2 in an emission electric field when the first power feeding terminal 2-1 and the second feeding terminal 2-2 are excited alone. A coupling amount c of the mutual coupling can be expressed by the following equation (1). In the following equation (1), $I_1 = A_1 e^{j\psi 1}$ and $I_2 = A_2 e^{j\psi 2}$.

$$E_\theta \ (\theta, \ \phi) \ = \ (I_1 + cI_2) \ E_{\theta 1} + \ (cI_1 + I_2) \ E_{\theta 2}$$
$$E_\phi \ (\theta, \ \phi) \ = \ (I_1 + cI_2) \ E_{\phi 1} + \ (cI_1 + I_2) \ E_{\phi 2} \qquad (1)$$

The coupling amount c is obtained in advance on the basis of pattern measurement, electromagnetic field analysis, or theoretical analysis, and is stored in the coupling coefficient storing unit 10.

When the above equation (1) is expressed by a circular polarization component, a left-handed circular polarization component $E_L(\theta, \varphi)$ and a right-handed circular polarization component $E_R(\theta, \varphi)$ are expressed by the following equation (2).

$$E_L(\theta, \ \phi) = \frac{E_\theta(\theta, \ \phi) - jE_\phi(\theta, \ \phi)}{\sqrt{2}} = \frac{1}{\sqrt{2}} \Big[ \big( E_{\theta 1} + cE_{\theta 2} - jE_{\phi 1}$$
$$- jcE_{\phi 2} \big) I_1 + \big( cE_{\theta 1} + E_{\theta 2} - jcE_{\phi 1} - jE_{\phi 2} \big) I_2 \Big]$$

$$E_R(\theta, \ \phi) = \frac{E_\theta(\theta, \ \phi) + jE_\phi(\theta, \ \phi)}{\sqrt{2}} = \frac{1}{\sqrt{2}} \Big[ \big( E_{\theta 1} + cE_{\theta 2} + jE_{\phi 1}$$
$$- jcE_{\phi 2} \big) I_1 + \big( cE_{\theta 1} + E_{\theta 2} - jcE_{\phi 1} - jE_{\phi 2} \big) I_2 \Big] \qquad (2)$$

In order to correct an axial ratio, it is only required to set a circular polarization component corresponding to a cross polarization component to zero. For example, when a right-handed circular polarization is emitted, it is only required to control $I_1$ and $I_2$ in such a manner as to satisfy an equation of $E_L(\theta, \varphi) = 0$. Conversely, when a left-handed circular polarization is emitted, it is only required to control $I_1$ and $I_2$ in such a manner as to satisfy an equation of $E_R(\theta, \varphi) = 0$. These equations have an infinite number of solutions, but in general, it is desirable to perform control in such a manner that an emission electric field intensity is as large as possible.

For example, when the reference amplitude is a maximum amplitude in the first amplitude adjusting circuit 3-1 and the second amplitude adjusting circuit 3-2 and an amplitude adjustment amount is controlled in such a manner as to satisfy $A_1 \leq 1$ and $A_2 \leq 1$, a solution satisfying the above two equations while maximizing the emission electric field intensity of the antenna element 2 is expressed by the following equation (3). In the following equation (3), $I_1$ and $I_2$ are expressed by complex numbers, + corresponds to a case where excitation is performed using a left-handed circular polarization as a main polarization, and - corresponds to a case where excitation is performed using a right-handed circular polarization as the main polarization.

In a case where $\left| E_{\theta 1} + cE_{\theta 2} \pm jE_{\phi 1} \pm jcE_{\phi 2} \right| \geq \left| cE_{\theta 1} + E_{\theta 2} \pm jcE_{\phi 1} \pm jE_{\phi 2} \right|$

$$\begin{cases} I_1 = -\dfrac{cE_{\theta 1} + E_{\theta 2} \pm jcE_{\phi 1} \pm jE_{\phi 2}}{E_{\theta 1} + cE_{\theta 2} + jE_{\phi 1} + jcE_{\phi 2}} \quad \text{(Both signs taken with the same order)} \\ I_2 = 1 \end{cases}$$

$$(3)$$

In a case where $\left| E_{\theta 1} + cE_{\theta 2} \pm jE_{\phi 1} \pm jcE_{\phi 2} \right| \leq \left| cE_{\theta 1} + E_{\theta 2} \pm jcE_{\phi 1} \pm jE_{\phi 2} \right|$

$$\begin{cases} I_1 = 1 \\ I_2 = -\dfrac{E_{\theta 1} + cE_{\theta 2} \pm jE_{\phi 1} \pm jcE_{\phi 2}}{cE_{\theta 1} + E_{\theta 2} \pm jcE_{\phi 1} \pm jE_{\phi 2}} \quad \text{(Both signs taken with the same order)} \end{cases}$$

Next, a correction control amount determining method according to the first embodiment will be described.

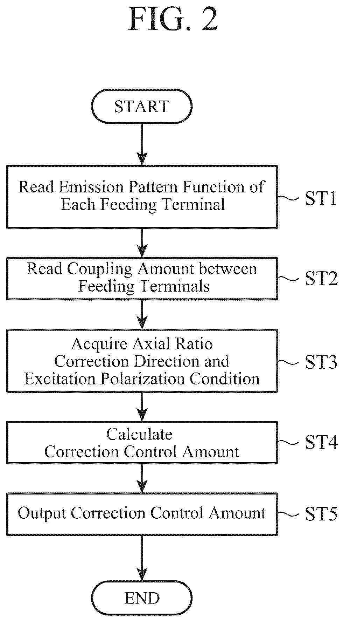

FIG. 2 is a flowchart illustrating the correction control amount determining method according to the first embodiment, and illustrates a series of processes in the correction control amount determining method executed by the circular polarization antenna device 1.

The correction control amount calculating unit 11 reads emission pattern functions $E_{\theta 1}$ and $E_{\varphi 1}$ of a high-frequency signal emitted via the first feeding terminal 2-1, stored in the emission pattern function storing unit 9, and reads emission pattern functions $E_{\theta 2}$ and $E_{\varphi 2}$ of a high-frequency signal emitted via the second feeding terminal 2-2 (step ST1). Subsequently, the correction control amount calculating unit 11 reads the coupling amount c between the first feeding terminal 2-1 and the second feeding terminal 2-2, stored in the coupling coefficient storing unit 10 (step ST2).

The correction control amount calculating unit 11 acquires an axial ratio correction direction $(\theta_0, \varphi_0)$ and an excitation polarization condition (step ST3). For example, the axial ratio correction direction $(\theta_0, \varphi_0)$ and the excitation polarization condition are set by a user in the correction control amount calculating unit 11 using an operation device not illustrated in FIG. 1 or stored in the emission pattern function storing unit 9 or the coupling coefficient storing unit 10.

The correction control amount calculating unit 11 calculates control amounts $I_1$ and $I_2$ necessary for axial ratio correction according to the above equation (3) using these pieces of information, calculates correction control amounts $A_1$ and $A_2$ related to an amplitude, and calculates correction control amounts $\psi_1$ and $\psi_2$ related to a phase in the calculated control amounts $I_1$ and $I_2$ (step ST4).

The correction control amount calculating unit 11 outputs the correction control amounts $A_1$ and $A_2$ to the amplitude adjustment controlling unit 7, and outputs the correction control amounts $\psi_1$ and $\psi_2$ to the phase shifter controlling unit 8 (step ST5).

The amplitude adjustment controlling unit 7 generates a control signal to be set in the first amplitude adjusting circuit 3-1 on the basis of the correction control amount, and outputs the generated control signal to the first amplitude adjusting circuit 3-1.

Furthermore, the amplitude adjustment controlling unit 7 generates a control signal to be set in the second amplitude adjusting circuit 3-2 on the basis of the correction control amount, and outputs the generated control signal to the second amplitude adjusting circuit 3-2. The phase shifter controlling unit 8 generates a control signal to be set in the first phase shifter 4-1 on the basis of the correction control amount, and outputs the generated control signal to the first phase shifter 4-1.

The phase shifter controlling unit 8 generates a control signal to be set in the second phase shifter 4-2 on the basis of the correction control amount, and outputs the generated control signal to the second phase shifter 4-2. As a result, a radio wave emitted from the circular polarization antenna device 1 to an external space is controlled in such a manner that a cross polarization component is zero. Therefore, it is possible to improve the axial ratio.

A control amount determined in an antenna described in Patent Literature 1 is equal to an amount assumed that the coupling amount c is zero in the above equation (3). The coupling amount c is usually finite, and therefore an axial ratio improving effect by the control amount in Patent Literature 1 is small.

Meanwhile, since the circular polarization antenna device 1 determines the control amount in consideration of the finite coupling amount c as indicated in the above equation (3), even when a re-emission component caused by mutual coupling between the first feeding terminal 2-1 and the second feeding terminal 2-2 is large, the circular polarization antenna device 1 can obtain a high axial ratio improving effect in a predetermined direction as compared with Patent Literature 1.

Note that, although the case where the circular polarization antenna device 1 functions as a transmission antenna has been described, a similar effect can be obtained even when the circular polarization antenna device 1 functions as a reception antenna.

FIG. 3 is a block diagram illustrating a hardware configuration for implementing a function of the circular polarization antenna device 1. For example, the circular polarization antenna device 1 includes an input interface 100, an output interface 101, a processor 102, and a memory 103 as a hardware configuration. Functions of the amplitude adjustment controlling unit 7, the phase shifter controlling unit 8, and the correction control amount calculating unit 11 included in the circular polarization antenna device 1 are implemented by executing an information processing application in the hardware configuration.

The input interface 100 relays data read from the emission pattern function storing unit 9 and the coupling coefficient storing unit 10, and outputs the data to the processor 102. The output interface 101 relays control signals output from the amplitude adjustment controlling unit 7 to the first amplitude adjusting circuit 3-1 and the second amplitude adjusting circuit 3-2, and relays control signals output from the phase shifter controlling unit 8 to the first phase shifter 4-1 and the second phase shifter 4-2.

An information processing application program for implementing the functions of the amplitude adjustment controlling unit 7, the phase shifter controlling unit 8, and the correction control amount calculating unit 11 is stored in the memory 103. By the processor 102 executing the program read from the memory 103, the functions of the amplitude adjustment controlling unit 7, the phase shifter controlling unit 8, and the correction control amount calculating unit 11 are implemented.

Note that the memory 103 is, for example, a hard disk device or a random access memory (RAM).

As described above, the circular polarization antenna device 1 according to the first embodiment includes: the correction control amount calculating unit 11 that calculates a correction control amount for axial ratio correction on the basis of a function representing a shape of an emission pattern of a high-frequency signal emitted from the antenna element 2 and a coupling amount between the first feeding terminal 2-1 and the second feeding terminal 2-2; the amplitude adjustment controlling unit 7 that controls amplitude adjustment performed by the first amplitude adjusting circuit 3-1 and the second amplitude adjusting circuit 3-2 on the basis of the correction control amount; and the phase shifter controlling unit 8 that controls phase adjustment performed by the first phase shifter 4-1 and the second phase shifter 4-2 on the basis of the correction control amount. As a result, even when a re-emission component caused by mutual coupling between the first feeding terminal 2-1 and the second feeding terminal 2-2 is large, a high axial ratio improving effect can be obtained in a predetermined direction, and thus, the circular polarization antenna device 1 can determine a correction control amount with which an axial ratio is improved.

In the circular polarization antenna device 1 according to the first embodiment, the antenna element 2 includes: the first emission element that emits a high-frequency signal whose main polarization component is linear polarization; and the second emission element that emits a high-frequency signal whose main polarization component is linear polarization orthogonal to the linear polarization of the high-frequency signal emitted by the first emission element, the first emission element and the second emission element being arranged orthogonally to each other. The first feeding terminal 2-1 is connected to one of the first emission element and the second emission element, and the second feeding terminal 2-2 is connected to the other one of the first emission element and the second emission element. As a result, the circular polarization antenna device 1 can determine a correction control amount with which an axial ratio is improved.

In the circular polarization antenna device 1 according to the first embodiment, the first emission element and the second emission element are dipole antennas or patch antennas. As a result, antenna devices of various aspects can be implemented as the circular polarization antenna device 1.

In the circular polarization antenna device 1 according to the first embodiment, the antenna element 2 is a single emission element capable of emitting two linear polarized waves orthogonal to each other. As a result, antenna devices of various aspects can be implemented as the circular polarization antenna device 1.

In the circular polarization antenna device 1 according to the first embodiment, the emission element is a circular or rectangular patch antenna. Two line segments connecting a connection point with the first feeding terminal 2-1 or the second feeding terminal 2-2 and a center point of the emission element are orthogonal to each other. As a result, the circular polarization antenna device 1 can achieve good circular polarization characteristics.

In the circular polarization antenna device 1 according to the first embodiment, the correction control amount calculating unit 11 calculates a correction control amount using the above equation (3). As a result, the circular polarization antenna device 1 can determine a correction control amount with which an axial ratio is optimally improved.

A correction control amount determining method according to the first embodiment includes: calculating, by the correction control amount calculating unit 11, a correction control amount for axial ratio correction on the basis of a function representing a shape of an emission pattern of a high-frequency signal emitted from the antenna element 2 via each of the first feeding terminal 2-1 and the second feeding terminal 2-2 and a coupling amount between the first feeding terminal 2-1 and the second feeding terminal 2-2; controlling, by the amplitude adjustment controlling unit 7, amplitude adjustment performed by the first amplitude adjusting circuit 3-1 and the second amplitude adjusting circuit 3-2 on the basis of the correction control amount; and controlling, by the phase shifter controlling unit 8, phase adjustment performed by the first phase shifter 4-1 and the second phase shifter 4-2 on the basis of the correction control amount.

By the circular polarization antenna device 1 executing this method, a correction control amount with which an axial ratio is improved can be determined.

Second Embodiment.

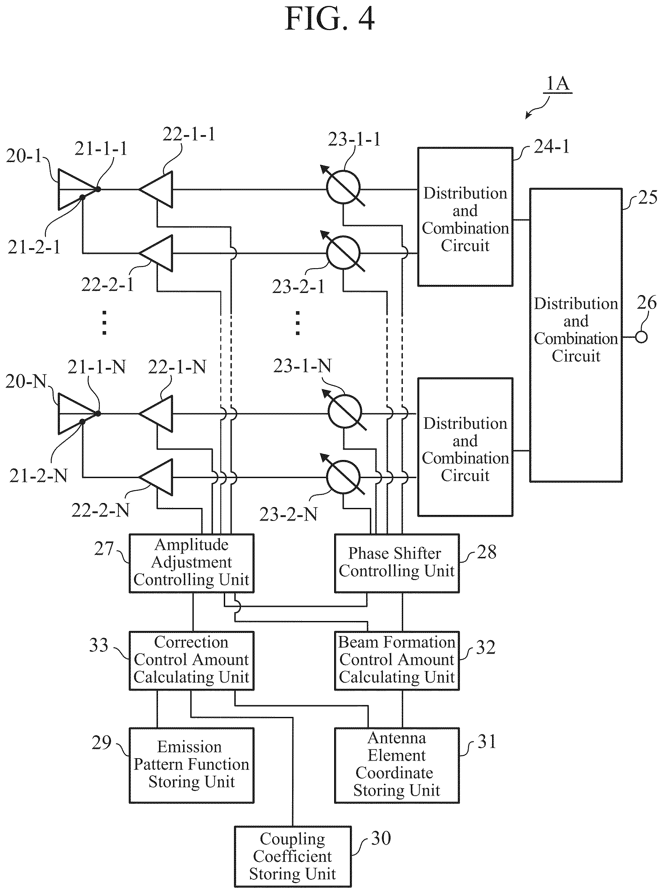

FIG. 4 is a block diagram illustrating a configuration of a circular polarization antenna device 1A according to a second embodiment. In FIG. 4, the circular polarization antenna device 1A is a circular polarization array antenna including a plurality of antenna elements that transmits and receives a high-frequency signal of circular polarization, that is, a circular polarization phased array antenna. In a case where n is an integer from 1 to N and N is the number of antenna elements, the circular polarization antenna device 1A includes N antenna units each including an antenna element 20-n, a first amplitude adjusting circuit 22-1-n, a second amplitude adjusting circuit 22-2-n, a first phase shifter 23-1-n, a second phase shifter 23-2-n, and a distribution and combination circuit 24-n, a distribution and combination circuit 25, an input and output terminal 26, an amplitude adjustment controlling unit 27, a phase shifter controlling unit 28, an emission pattern function storing unit 29, a coupling coefficient storing unit 30, an antenna element coordinate storing unit 31, a beam formation control amount calculating unit 32, and a correction control amount calculating unit 33. The antenna element 20-n includes a first feeding terminal 21-1-n and a second feeding terminal 21-2-n.

The antenna element 20-n is an emission element capable of emitting or receiving radio waves having respective two orthogonal polarization characteristics. For example, the antenna element 20-n is a pair of emission elements including a first emission element and a second emission element, and the first emission element and the second emission element are circular or rectangular patch antennas, a pair of dipole antennas arranged orthogonally to each other, or the like.

The first feeding terminal 21-1-n is a feeding terminal included in the antenna element 20-n, and the second feeding terminal 21-2-n is a feeding terminal disposed at a position different from that of the first feeding terminal 21-1-n in the antenna element 20-n. The first feeding terminal 21-1-n and the second feeding terminal 21-2-n are arranged in such a manner that a main polarization component of a radio wave emitted or received by the first emission element via the first feeding terminal 21-1-n is orthogonal to a main polarization component of a radio wave emitted or received by the second emission element via the second feeding terminal 21-2-n.

The first amplitude adjusting circuit 22-1-n is a circuit that adjusts an amplitude of a high-frequency signal transmitted and received via the first feeding terminal 21-1-n, and the second amplitude adjusting circuit 22-2-n is a circuit that adjusts an amplitude of a high-frequency signal transmitted and received via the second feeding terminal 21-2-n. Each of the first amplitude adjusting circuit 22-1-n and the second amplitude adjusting circuit 22-2-n is constituted by, for example, a variable amplifier, or an amplifier and a variable attenuator.

The first phase shifter 23-1-n is a circuit that adjusts a phase of a high-frequency signal input to and output from the first amplitude adjusting circuit 22-1-n, and the second phase shifter 23-2-n is a circuit that adjusts a phase of a high-frequency signal input to and output from the second amplitude adjusting circuit 22-2-n.

Each of the first phase shifter 23-1-n and the second phase shifter 23-2-n is, for example, constituted by a phase shift circuit that changes a phase of a signal using an element such as a capacitor or an inductor, or constituted by a phase comparator loop (PLL) that compares phases of signals and changes the phases of the signals using a difference therebetween.

The distribution and combination circuit 24-n is a first distribution and combination circuit that distributes high-frequency signals to the first phase shifter 23-1-n and the second phase shifter 23-2-n and combines high-frequency signals from the first phase shifter 23-1-n and the second phase shifter 23-2-n.

The distribution and combination circuit 25 is a second distribution and combination circuit that distributes a high-frequency signal to the distribution and combination circuit 24-n and combines a high-frequency signal from the distribution and combination circuit 24-n. As illustrated in FIG. 4, the distribution and combination circuit 25 is connected to the input and output terminal 26 to/from which a high-frequency signal is input and output, separately from the distribution and combination circuit 24-n.

The amplitude adjustment controlling unit 27 controls amplitude adjustment performed by the first amplitude adjusting circuit 22-1-n and the second amplitude adjusting circuit 22-2-n on the basis of a correction control amount related to an amplitude of a high-frequency signal calculated by the correction control amount calculating unit 33. For example, the amplitude adjustment controlling unit 27 generates a control signal for controlling the amount of the amplitude adjustment performed by the first amplitude adjusting circuit 22-1-n and the second amplitude adjusting circuit 22-2-n to be a predetermined value, and outputs the generated control signal to each of the first amplitude adjusting circuit 22-1-n and the second amplitude adjusting circuit 22-2-n.

The phase shifter controlling unit 28 controls phase adjustment performed by the first phase shifter 23-1-n and the second phase shifter 23-2-n on the basis of a correction control amount related to a phase of a high-frequency signal calculated by the correction control amount calculating unit 33.

For example, the phase shifter controlling unit 28 generates a control signal for controlling the amount of the phase adjustment performed by the first phase shifter 23-1-n and the second phase shifter 23-2-n to be a predetermined value, and outputs the generated control signal to each of the first phase shifter 23-1-n and the second phase shifter 23-2-n.

The emission pattern function storing unit 29 is a storage unit that stores a function representing a shape of an emission pattern of a high-frequency signal. In a case where $n_0$ is an integer from 1 to N, the above function stored in the emission pattern function storing unit 29 is a function representing a shape of an electric field emission pattern emitted from an antenna element 20-$n_0$ serving as a reference when power is independently fed to each of a first feeding terminal 21-1-$n_0$ and a second feeding terminal 21-2-$n_0$ arranged in the antenna element 20-$n_0$ among the antenna elements 20-n with a predetermined reference amplitude and a predetermined reference phase.

The coupling coefficient storing unit 30 is a storage unit that stores a coupling amount between the first feeding terminal 21-1-$n_0$ and the second feeding terminal 21-2-$n_0$ arranged in the antenna element 20-$n_0$ serving as a reference. This coupling amount represents an amplitude and a phase of a high-frequency signal corresponding to a coupling amount between the first feeding terminal 21-1-$n_0$ and the second feeding terminal 21-2-$n_0$.

Furthermore, the coupling coefficient storing unit 30 also stores a coupling amount among the first feeding terminal 21-1-$n_0$ and the second feeding terminal 21-2-$n_0$ arranged in the antenna element 20-$n_0$ serving as a reference, and a first feeding terminal 21-1-m and a second feeding terminal 21-2-m arranged in M antenna elements 20-m arranged around the antenna element 20-$n_0$ serving as a reference.

This coupling amount also represents an amplitude and a phase of a high-frequency signal corresponding to the coupling amount.

Note that m is an integer other than $n_0$.

The antenna element coordinate storing unit 31 is a storage unit that stores coordinate information of the antenna element 20-n included in each of the N antenna units. The coordinate information is coordinate information indicating an element position of the antenna element 20-n.

The emission pattern function storing unit 29, the coupling coefficient storing unit 30, and the antenna element coordinate storing unit 31 are, for example, memories 103 illustrated in FIG. 3.

Note that the emission pattern function storing unit 29, the coupling coefficient storing unit 30, and the antenna element coordinate storing unit 31 only need to be accessible by the beam formation control amount calculating unit 32 and the correction control amount calculating unit 33 included in the circular polarization antenna device 1A, and may be disposed outside the circular polarization antenna device 1A.

The beam formation control amount calculating unit 32 calculates an amplitude control amount and a phase control amount necessary for beam formation using coordinate information of the antenna element 20-n included in each of the N antenna units. For example, the beam formation control amount calculating unit 32 reads the coordinate information of the antenna element 20-n included in each of the N antenna units from the antenna element coordinate storing unit 31, and further acquires a frequency of a high-frequency signal, information regarding a beam scanning direction, a correction control amount related to a phase of a high-frequency signal for performing calibration, and a correction control amount related to an amplitude for providing an amplitude distribution to a high-frequency signal emitted from the antenna element 20-n for reducing a side lobe.

Subsequently, using the coordinate information of the antenna element 20-n, the frequency of the high-frequency signal, the information regarding the beam scanning direction, the correction control amount related to the phase of the high-frequency signal, and the correction control amount related to the amplitude that have been acquired, the beam formation control amount calculating unit 32 calculates a correction control amount related to an amplitude of a high-frequency signal and a correction control amount related to a phase of the high-frequency signal necessary for beam formation according to a control amount calculating equation. The correction control amount related to the amplitude is output from the beam formation control amount calculating unit 32 to the amplitude adjustment controlling unit 27, and the correction control amount related to the phase is output from the beam formation control amount calculating unit 32 to the phase shifter controlling unit 28.

The correction control amount related to the amplitude is a correction control amount for the amplitude adjustment controlling unit 27 to generate a control signal to be output to the first amplitude adjusting circuit 22-1-n and the second amplitude adjusting circuit 22-2-n. The correction control amount related to the phase is a correction control amount for the phase shifter controlling unit 28 to generate a control signal to be output to the first phase shifter 23-1-n and the second phase shifter 23-2-n.

The correction control amount calculating unit 33 calculates a correction control amount for axial ratio correction on the basis of a function representing a shape of an emission pattern of a high-frequency signal emitted from the antenna element 20-n via each of the first feeding terminal 21-1-n and the second feeding terminal 21-2-n and a coupling amount between the first feeding terminal 21-1-n and the second feeding terminal 21-2-n.

For example, the correction control amount calculating unit 33 reads, from the emission pattern function storing unit 29, a function representing a shape of an emission pattern of a high-frequency signal emitted from the antenna element 20-n via the first feeding terminal 21-1-n and a function representing a shape of an emission pattern of a high-frequency signal emitted from the antenna element 20-n via the second feeding terminal 21-2-n, reads a coupling amount from the coupling coefficient storing unit 30, and reads coordinate information of the antenna element 20-n included in each of the N antenna units from the antenna element coordinate storing unit 31. In addition to these pieces of information, the correction control amount calculating unit 11 calculates a correction control amount related to an amplitude of a high-frequency signal and a correction control amount related to a phase necessary for axial ratio correction according to a correction control amount calculating equation using preset information regarding a frequency of a high-frequency signal, an axial ratio correction direction, and an excitation polarization condition. Note that the axial ratio correction direction is the same as the above-described beam scanning direction.

Then, the correction control amount calculating unit 33 outputs a correction control amount related to an amplitude of a high-frequency signal emitted from the antenna element 20-n via the first feeding terminal 21-1-n to the first amplitude adjusting circuit 22-1-n, and outputs a correction control amount related to an amplitude of a high-frequency signal emitted from the antenna element 20-n via the second feeding terminal 21-2-n to the second amplitude adjusting circuit 22-2-n. Furthermore, the correction control amount calculating unit 33 outputs a correction control amount related to a phase of a high-frequency signal input to and output from the first amplitude adjusting circuit 22-1-n to the first phase shifter 23-1-n, and outputs a correction control amount related to a phase of a high-frequency signal input to and output from the second amplitude adjusting circuit 22-2-n to the second phase shifter 23-2-n.

Next, operation of the circular polarization antenna device 1A functioning as a transmission antenna will be described.

First, the distribution and combination circuit 25 distributes high-frequency signals input to the input and output terminal 26 to N high-frequency signals having approximately equal amplitudes and an equal phase, and outputs each of the high-frequency signals to the distribution and combination circuit 24-n. The distribution and combination circuit 24-n distributes the high-frequency signals input to the distribution and combination circuit 24-n to N high-frequency signals having approximately equal amplitudes and an equal phase, and outputs the high-frequency signals to the first phase shifter 23-1-n and the second phase shifter 23-2-n.

The first phase shifter 23-1-n adjusts the phase of the high-frequency signal input from the distribution and combination circuit 24-n according to the control signal input from the phase shifter controlling unit 28, and outputs the high-frequency signal having the adjusted phase to the first amplitude adjusting circuit 22-1-n. Similarly, the second phase shifter 23-2-n adjusts the phase of the high-frequency signal input from the distribution and combination circuit 24-n according to the control signal input from the phase shifter controlling unit 28, and outputs the high-frequency signal having the adjusted phase to the second amplitude adjusting circuit 22-2-n.

The first amplitude adjusting circuit 22-1-n adjusts the amplitude of the high-frequency signal input from the first phase shifter 23-1-n according to the control signal input from the amplitude adjustment controlling unit 27, and outputs the high-frequency signal having the adjusted amplitude to the antenna element 20-n via the first feeding terminal 21-1-n.

Similarly, the second amplitude adjusting circuit 22-2-n adjusts the amplitude of the high-frequency signal input from the second phase shifter 23-2-n according to the control signal input from the amplitude adjustment controlling unit 27, and outputs the high-frequency signal having the adjusted amplitude to the antenna element 20-n via the second feeding terminal 21-2-n.

The high-frequency signals input to the antenna element 20-n via the first feeding terminal 21-1-n and the second feeding terminal 21-2-n are emitted to an external space as radio waves. A main polarization component of a radio wave emitted from the antenna element 20-n via the first feeding terminal 21-1-n and a main polarization component of a radio wave emitted from the antenna element 20-n via the second feeding terminal 21-2-n are orthogonal to each other.

By adjusting an amplitude and a phase of a high-frequency signal passing through the first amplitude adjusting circuit 22-1-n and the first phase shifter 23-1-n and adjusting an amplitude and a phase of a high-frequency signal passing through the second amplitude adjusting circuit 22-2-n and the second phase shifter 23-2-n, it is possible to perform control in such a manner that the high-frequency signals of these two orthogonal polarization components have an equal amplitude and a phase difference of 90 degrees, and it is possible to achieve good circular polarization characteristics.

Furthermore, in the circular polarization antenna device 1A, phases of radio waves emitted from the antenna element 20-n are controlled to be the same in a predetermined direction by high-frequency signal phase adjustment performed by the first phase shifter 23-1-n and the second phase shifter 23-2-n. As a result, the circular polarization antenna device 1A can perform scanning in a main emission direction of a radio wave in the predetermined direction.

For example, in a case where the antenna element 20-1 is used as an antenna element serving as a reference, when power is fed to the first feeding terminal 21-1-1 at a predetermined reference amplitude and a predetermined reference phase in a spherical coordinate system with a center of the antenna element 20-1 as an origin, signals of polarization components of an electric field in $(\theta, \varphi)$ directions, emitted from the antenna element 20-1 are represented by $E_{\theta 1}(\theta, \varphi)$ and $E_{\varphi 1}(\theta, \varphi)$.

The subscript $\theta$ represents a signal of a linear polarization component in a $\theta$ direction, the subscript $\varphi$ represents a signal of a linear polarization component in a $\varphi$ direction, and these signals are signals of linear polarization components orthogonal to each other.

Furthermore, each of these signals does not include a re-emission component caused by mutual coupling with the second feeding terminal 2-2 and with an antenna element around the antenna element 20-1.

Similarly, when power is fed to the second feeding terminal 21-2-1 at a predetermined reference amplitude and a predetermined reference phase, polarization components of an electric field in $(\theta, \varphi)$ directions, emitted from the antenna element 20-1 are represented by $E_{\theta 2}(\theta, \varphi)$ and $E_{\varphi 2}(\theta, \varphi)$.

Hereinafter, in order to simplify expression, an argument $(\theta, \varphi)$ of each polarization component of an electric field is omitted.

Each of these components does not include a re-emission component caused by mutual coupling between the first feeding terminal 21-1-1 and a feeding terminal disposed in an antenna element around the antenna element 20-1.

$E_{\theta 1}$, $E_{\varphi 1}$, $E_{\theta 2}$, and $E_{\varphi 2}$ are functions of $(\theta, \varphi)$ representing a shape of an electric field emission pattern expressed by a trigonometric function, a Bessel function, or a Hankel function, and are obtained in advance by performing pattern measurement, electromagnetic field analysis, theoretical analysis, or the like. $E_{\theta 1}$, $E_{\varphi 1}$, $E_{\theta 2}$, and $E_{\varphi 2}$ are stored in the emission pattern function storing unit 29.

The first amplitude adjusting circuit 22-1-1 connected to the antenna element 20-1 serving as a reference multiplies an amplitude, which is a reference amplitude, of a high-frequency signal by $A_1$, and the second amplitude adjusting circuit 22-2-1 multiplies an amplitude, which is a reference amplitude, of a high-frequency signal by $A_2$. The first phase shifter 23-1-1 shifts a phase, which is a reference phase, of a high-frequency signal by $\psi_1$, and the second phase shifter 23-2-1 shifts a phase, which is a reference phase, of a high-frequency signal by $\psi_2$. In these cases, an electric field emitted from the antenna element 20-1 is considered.

The electric field can be obtained by considering a re-emission component caused by mutual coupling between the first feeding terminal 21-1-1 and the second feeding terminal 21-2-1 and mutual coupling between a first feeding terminal 21-1-m and a second feeding terminal 21-2-m arranged in an antenna element around the antenna element 20-1 in an emission electric field when the first feeding terminal 21-1-1 and the second feeding terminal 21-2-1 are excited alone.

A coupling amount $c_{12}(1)$ is a mutual coupling amount between the first feeding terminal 21-1-1 and the second feeding terminal 21-2-1 arranged in the antenna element 20-1 serving as a reference. A coupling amount $c_{11}(m)$ is a mutual coupling amount between the first feeding terminal 21-1-1 disposed in the antenna element 20-1 and a first feeding terminal 21-1-m disposed in an antenna element 20-m around the antenna element 20-1. A coupling amount $c_{21}(m)$ is a mutual coupling amount between the first feeding terminal 21-1-1 disposed in the antenna element 20-1 and a second feeding terminal 21-2-m disposed in the antenna element 20-m around the antenna element 20-1. A coupling amount $c_{12}(m)$ is a mutual coupling amount between the second feeding terminal 21-2-1 disposed in the antenna element 20-1 and the first feeding terminal 21-1-m disposed in the antenna element 20-m around the antenna element 20-1. A coupling amount $c_{22}(m)$ is a mutual coupling amount between the second feeding terminal 21-2-1 disposed in the antenna element 20-1 and the second feeding terminal 21-2-m disposed in the antenna element 20-m around the antenna element 20-1.

In this case, emission electric fields $E_\theta(\theta, \varphi)$ and $E_\varphi(\theta, \varphi)$ emitted from the antenna element 20-1 are expressed by the following equation (4).

In the following equation (4), $I_1 = A_1 e^{j\psi 1}$, $I_2 = A_w e^{j\psi 2}$, and $\Psi_m = k_0 (x_m \cos\varphi p \sin\theta + y_m \sin\varphi \sin\theta + z_m \cos\theta)$, and $k_0$ is a wave number at an operation frequency. $(x_m, y_m, z_m)$ is position coordinates of an antenna element 20-m around the antenna element 20-1 with position coordinates of the antenna element 20-1 serving as a reference as an origin.

In addition, $c_{11}(1) = c_{22}(1) = 1$ and $c_{21}(1) = c_{12}(1)$.

Note that these coupling amounts are obtained in advance on the basis of pattern measurement, electromagnetic field analysis, theoretical analysis, or the like, and are stored in the coupling coefficient storing unit 30.

$$E_\theta (\theta, \phi) = \sum_{m-1}^{M} e^{j\Psi m} \left[ (c_{11}(m) I_1 + c_{12}(m) I_2) E_{\theta 1} + (c_{21}(m) I_1 + c_{22}(m) I_2) E_{\theta 2} \right]$$

$$E_\phi (\theta, \phi) = \sum_{m-1}^{M} e^{j\Psi m} \left[ (c_{11}(m) I_1 + c_{12}(m) I_2) E_{\phi 1} + (c_{21}(m) I_1 + c_{22}(m) I_2) E_{\phi 2} \right] \tag{4}$$

The above equation (4) approximates that the antenna element 20-m has the same emission pattern as a radio wave emitted from the antenna element 20-1 serving as a reference, but it is known that this approximation generally holds for an array antenna including a large number of antenna elements.

When the above equation (4) is expressed by a circular polarization component, a left-handed circular polarization component $E_L(\theta, \varphi)$ and a right-handed circular polarization component $E_R(\theta, \varphi)$ are expressed by the following equation (5).

$$E_L(\theta, \phi) = \frac{1}{\sqrt{2}} \sum_{m-1}^{M} e^{j\Psi m} \left[ \{ c_{11}(m)E_{\theta 1} + c_{21}(m)E_{\theta 2} - jc_{11}(m)E_{\phi 1} - jc_{21}(m)E_{\phi 2} \} I_1 + \{ c_{12}(m)E_{\theta 1} + c_{22}(m)E_{\theta 2} - jc_{12}(m)E_{\phi 1} - jc_{22}(m)E_{\phi 2} \} I_2 \right]$$

$$E_R(\theta, \phi) = \frac{1}{\sqrt{2}} \sum_{m-1}^{M} e^{j\Psi m} \left[ \{ c_{11}(m)E_{\theta 1} + c_{21}(m)E_{\theta 2} + jc_{11}(m)E_{\phi 1} + jc_{21}(m)E_{\phi 2} \} I_1 + \{ c_{12}(m)E_{\theta 1} + c_{22}(m)E_{\theta 2} + jc_{12}(m)E_{\phi 1} + jc_{22}(m)E_{\phi 2} \} I_2 \right] \tag{5}$$

In order to correct an axial ratio, it is only required to set a circular polarization component that is a cross polarization component to 0. For example, in a case where the circular polarization antenna device 1A emits a right-handed circular polarization, it is only required to control Ii and $I_2$ in such a manner as to satisfy an equation of $E_L(\theta, \varphi) = 0$.

Conversely, in a case where the circular polarization antenna device 1A emits a left-handed circular polarization, it is only required to control $I_1$ and $I_2$ in such a manner as to satisfy an equation of $E_R(\theta, \varphi) = 0$. These equations have an infinite number of solutions, but in general, it is desirable to perform control in such a manner that an emission electric field intensity is as large as possible.

For example, when the reference amplitude is a maximum amplitude in the first amplitude adjusting circuit 22-1-1 and the second amplitude adjusting circuit 22-2-1 and an amplitude adjustment amount is controlled in such a manner as to satisfy $A_1 \leq 1$ and $A_2 \leq 1$, a solution satisfying the above two equations while maximizing the emission electric field intensity of the antenna element 20-1 is expressed by the following equation (6).

In the following equation (6), $I_1$ and $I_2$ are expressed by complex numbers, + corresponds to a case where excitation is performed using a left-handed circular polarization as a main polarization, and - corresponds to a case where excitation is performed using a right-handed circular polarization as the main polarization.

$c_{ij}(m)$ is a coupling amount between the j-th feeding terminal of an antenna element serving as a reference and the i-th feeding terminal of the m-th antenna element among the M antenna elements around the j-th feeding terminal. i and j are integers of 1 or 2.

$$\text{In a case where } \left|\sum_{m=1}^{M} e^{j\Psi m}\left\{c_{11}(m)E_{\theta 1} + c_{21}(m)E_{\theta 2} \pm jc_{11}(m)E_{\phi 1} \pm jc_{21}(m)E_{\phi 2}\right\}\right| \geq$$

$$\left|\sum_{m=1}^{M} e^{j\Psi m}\left\{c_{12}(m)E_{\theta 1} + c_{22}(m)E_{\theta 2} \pm jc_{12}(m)E_{\phi 1} \pm jc_{22}(m)E_{\phi 2}\right\}\right|$$

$$\begin{cases} I_1 = -\dfrac{\sum_{m=1}^{M} e^{j\Psi m}\left\{c_{12}(m)E_{\theta 1} + c_{22}(m)E_{\theta 2} \pm jc_{12}(m)E_{\phi 1} \pm jc_{22}(m)E_{\phi 2}\right\}}{\sum_{m=1}^{M} e^{j\Psi m}\left\{c_{11}(m)E_{\theta 1} + c_{21}(m)E_{\theta 2} \pm jc_{11}(m)E_{\phi 1} \pm jc_{21}(m)E_{\phi 2}\right\}} \\ I_2 = 1 \end{cases}$$

(Both signs taken with the same order)

$$\text{In a case where } \left|\sum_{m=1}^{M} e^{j\Psi m}\left\{c_{11}(m)E_{\theta 1} + c_{21}(m)E_{\theta 2} \pm jc_{11}(m)E_{\phi 1} \pm jc_{21}(m)E_{\phi 2}\right\}\right| \leq$$

$$\left|\sum_{m=1}^{M} e^{j\Psi m}\left\{c_{12}(m)E_{\theta 1} + c_{22}(m)E_{\theta 2} \pm jc_{12}(m)E_{\phi 1} \pm jc_{22}(m)E_{\phi 2}\right\}\right|$$

$$\begin{cases} I_1 = 1 \\ I_2 = -\dfrac{\sum_{m=1}^{M} e^{j\Psi m}\left\{c_{11}(m)E_{\theta 1} + c_{21}(m)E_{\theta 2} \pm jc_{11}(m)E_{\phi 1} \pm jc_{21}(m)E_{\phi 2}\right\}}{\sum_{m=1}^{M} e^{j\Psi m}\left\{c_{12}(m)E_{\theta 1} + c_{22}(m)E_{\theta 2} \pm jc_{12}(m)E_{\phi 1} \pm jc_{22}(m)E_{\phi 2}\right\}} \end{cases}$$

(Both signs taken with the same order)

$$(6)$$

Next, a correction control amount determining method according to the second embodiment will be described.

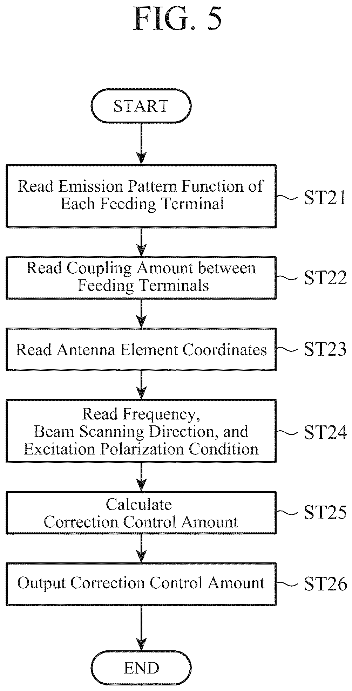

FIG. 5 is a flowchart illustrating the correction control amount determining method according to the second embodiment, and illustrates a series of processes in a correction control amount determining method executed by the circular polarization antenna device 1A.

The correction control amount calculating unit 33 reads emission pattern functions $E_{\theta 1}$ and $E_{\varphi 1}$ of a high-frequency signal emitted via the first feeding terminal 21-1-n, stored in the emission pattern function storing unit 29, and reads emission pattern functions $E_{\theta 2}$ and $E_{\varphi 2}$ of a high-frequency signal emitted via the second feeding terminal 21-2-n (step ST21).

Next, the correction control amount calculating unit 33 reads the coupling amounts $c_{11}(m)$, $c_{21}(m)$, $c_{12}(m)$, and $c_{22}(m)$ between the first feeding terminal 21-1-n and the second feeding terminal 21-2-n, stored in the coupling coefficient storing unit 30 (step ST22). The correction control amount calculating unit 33 reads coordinate information of the antenna element 20-n stored in the antenna element coordinate storing unit 31 (step ST23).

The correction control amount calculating unit 33 acquires an axial ratio correction direction $(\theta_0, \varphi_0)$ and an excitation polarization condition (step ST24). For example, the axial ratio correction direction $(\theta_0, \varphi_0)$ and the excitation polarization condition are set by a user in the correction control amount calculating unit 33 using an operation device not illustrated in FIG. 1 or stored in the emission pattern function storing unit 29, the coupling coefficient storing unit 30, or the antenna element coordinate storing unit 31.

The correction control amount calculating unit 33 calculates control amounts Ii and $I_2$ necessary for axial ratio correction according to the above equation (6) using these pieces of information, calculates correction control amounts $A_1$

and $A_2$ related to an amplitude, and calculates correction control amounts $\psi_1$ and $\psi_2$ related to a phase in the calculated control amounts $I_1$ and $I_2$ (step ST25).

The correction control amount calculating unit 33 outputs the correction control amounts $A_1$ and $A_2$ to the amplitude adjustment controlling unit 27, and outputs the correction control amounts $\psi_1$ and $\psi_2$ to the phase shifter controlling unit 28 (step ST26).

The amplitude adjustment controlling unit 27 generates a control signal to be set in the first amplitude adjusting circuit 22-1-n on the basis of the correction control amount, and outputs the generated control signal to the first amplitude adjusting circuit 22-1-n. Furthermore, the amplitude adjustment controlling unit 27 generates a control signal to be set in the second amplitude adjusting circuit 22-2-n on the basis of the correction control amount, and outputs the generated control signal to the second amplitude adjusting circuit 22-2-n.

The phase shifter controlling unit 28 generates a control signal to be set in the first phase shifter 23-1-n on the basis of the correction control amount, and outputs the generated control signal to the first phase shifter 23-1-n.

The phase shifter controlling unit 28 generates a control signal to be set in the second phase shifter 23-2-n on the basis of the correction control amount, and outputs the generated control signal to the second phase shifter 23-2-n. As a result, a radio wave emitted from the circular polarization antenna device 1A to an external space is controlled in such a manner that a cross polarization component is zero. Therefore, it is possible to improve the axial ratio.

Note that the above equation (6) is a relational equation representing a control amount considering only an emission electric field of the antenna element 20-1 serving as a reference. Meanwhile, in an array antenna including a large number of elements, a similar discussion holds approximately for many antenna elements except for an antenna element at an end of the array antenna. Therefore, the circular polarization antenna device 1A gives, to all the antenna elements 20-n, the same correction control amount related to an amplitude and the same correction control amount related to a phase, based on the above equation (6).

The beam formation control amount calculating unit 32 calculates a control amount $w_n$ for performing scanning in a main emission direction of a radio wave in a beam scanning direction on the basis of element coordinates $(x_n, y_n, z_n)$ of the antenna element 20-n, a frequency, and a beam scanning direction $(\theta_0, \varphi_0)$, and forming a predetermined array pattern according to the following equation (7). In the following equation (7), $V_n$ is an amplitude value set for a high-frequency signal emitted from the antenna element 20-n in order to give an amplitude distribution to the high-frequency signal, and $P_n$ is a phase amount set for the high-frequency signal emitted from the antenna element 20-n for calibration.

$$w_n = V_n e^{jP_n} e^{-jk_0(x_n \cos\phi \sin\theta + y_n \sin\phi \sin\theta + z_n \cos\theta)} \qquad (7)$$

The beam formation control amount calculating unit 32 calculates the control amount $V_n$ related to an amplitude of a high-frequency signal included in the control amount $w_n$ and a control amount $\Phi_n$ related to a phase of the high-frequency signal, and the control amount $V_n$ and the control amount $\Phi_n$ are output to the amplitude adjustment controlling unit 27 and the phase shifter controlling unit 28, respectively.

The amplitude adjustment controlling unit 27 generates control signals to be set in the first amplitude adjusting circuit 22-1-n and the second amplitude adjusting circuit 22-2-n on the basis of the control amounts related to an amplitude, input from the correction control amount calculating unit 33 and the beam formation control amount calculating unit 32, and transmits the control signals to the first amplitude adjusting circuit 22-1-n and the second amplitude adjusting circuit 22-2-n.

The phase shifter controlling unit 28 generates control signals to be set in the first phase shifter 23-1-n and the second phase shifter 23-2-n on the basis of the control amounts related to a phase, input from the correction control amount calculating unit 33 and the beam formation control amount calculating unit 32, and transmits the control signals to the first phase shifter 23-1-n and the second phase shifter 23-2-n.

The control amount to be set in the first amplitude adjusting circuit 22-1-n connected to the antenna element 20-n is $A_1 + V_n$.

The control amount to be set in the second amplitude adjusting circuit 22-2-n is $A_2 + V_n$.

Furthermore, the control amount to be set in the first phase shifter 23-1-n is $\psi_1 + \Phi_n$. The phase control amount to be set in the second phase shifter 23-2-n is $\psi_2 + \Phi_n$.

The main emission direction of a radio wave emitted into space by the circular polarization antenna device 1A is a predetermined beam scanning direction $(\theta_0, \varphi_0)$. That is, the radio wave emitted into space is controlled in such a manner that scanning is performed in the beam scanning direction $(\theta_0, \varphi_0)$ and a cross polarization component thereof in the beam scanning direction is zero. Therefore, the circular polarization antenna device 1A can improve an axial ratio.

A control amount determined in an antenna described in Patent Literature 1 is determined by ignoring re-emission caused by mutual coupling between feeding terminals with an antenna element around an antenna element serving as a reference. Therefore, even when this control amount is applied to a phased array antenna, an axial ratio improving effect is small. Meanwhile, since the circular polarization antenna device 1A determines the control amount in consideration of a re-emission component caused by coupling between feeding terminals as indicated in the above equation (6), even when the re-emission component is large, the circular polarization antenna device 1A can obtain a high axial ratio improving effect as compared with Patent Literature 1.

Note that, although the case where the circular polarization antenna device 1A functions as a transmission antenna has been described, a similar effect can be obtained even when the circular polarization antenna device 1A functions as a reception antenna.

For example, the circular polarization antenna device 1A includes the input interface 100, the output interface 101, the processor 102, and the memory 103 as a hardware configuration illustrated in FIGS. 3A and 3B. Functions of the amplitude adjustment controlling unit 27, the phase shifter controlling unit 28, and the correction control amount calculating unit 33 included in the circular polarization antenna device 1A are implemented by executing an information processing application in the hardware configuration.

The input interface 100 relays data read from the emission pattern function storing unit 29, the coupling coefficient storing unit 30, and the antenna element coordinate storing unit 31, and outputs the data to the processor 102. The output interface 101 relays control signals output from the amplitude adjustment controlling unit 27 to the first amplitude adjusting circuit 22-1-n and the second amplitude adjusting circuit 22-2-n, and relays control signals output from the phase shifter controlling unit 28 to the first phase shifter 23-1-n and the second phase shifter 23-2-n.

An information processing application program for implementing the functions of the amplitude adjustment controlling unit 27, the phase shifter controlling unit 28, and the correction control amount calculating unit 33 is stored in the memory 103. By the processor 102 executing the program read from the memory 103, the functions of the amplitude adjustment controlling unit 27, the phase shifter controlling unit 28, and the correction control amount calculating unit 33 are implemented. Note that the memory 103 is, for example, a hard disk device or a RAM.

As described above, the circular polarization antenna device 1A according to the second embodiment includes: the distribution and combination circuit 25 that distributes a high-frequency signal to the distribution and combination circuit 24-n included in the N antenna units and combines a high-frequency signal from the distribution and combination circuit 24-n included in the N antenna units; the beam formation control amount calculating unit 32 that calculates an amplitude control amount and a phase control amount necessary for beam formation using coordinate information of the antenna element 20-n included in the N antenna units; the correction control amount calculating unit 33 that calculates a correction control amount for axial ratio correction on the basis of coordinate information of the antenna element 20-n, a function representing a shape of an emission pattern of a high-frequency signal emitted from the antenna element 20-n via each of the first feeding terminal 21-1-n and the second feeding terminal 21-2-n, and a coupling amount between the first feeding terminal 21-1-n and the second feeding terminal 21-2-n; the amplitude adjustment controlling unit 27 that controls amplitude adjustment performed by the first amplitude adjusting circuit 22-1-n and the second amplitude adjusting circuit 22-2-n on the basis of the correction control amount; and the phase shifter controlling unit 28 that controls phase adjustment performed by the first phase shifter 23-1-n and the second phase shifter 23-2-n on the basis of the correction control amount. As a result, in addition to the effects described in the first embodiment, even when the circular polarization antenna device 1A is a phased array antenna having a large re-emission component caused by mutual coupling between adjacent antenna elements, the circular polarization antenna device 1A can obtain a high axial ratio improving effect in a predetermined beam scanning direction.

In the circular polarization antenna device 1A according to the second embodiment, the antenna element 20-n includes: a first emission element that emits a high-frequency signal whose main polarization component is linear polarization; and a second emission element that emits a high-frequency signal whose main polarization component is linear polarization orthogonal to the linear polarization of the high-frequency signal emitted by the first emission element, the first emission element and the second emission element being arranged orthogonally to each other. The first feeding terminal 21-1-n is connected to one of the first emission element and the second emission element. The second feeding terminal 21-2-n is connected to the other one of the first emission element and the second emission element. As a result, the circular polarization antenna device 1A can determine a correction control amount with which an axial ratio is improved.

In the circular polarization antenna device 1A according to the second embodiment, the first emission element and the second emission element are dipole antennas or patch antennas. As a result, antenna devices of various aspects can be implemented as the circular polarization antenna device 1A.

In the circular polarization antenna device 1A according to the second embodiment, the antenna element 20-n is a single emission element capable of emitting two linear polarized waves orthogonal to each other. As a result, antenna devices of various aspects can be implemented as the circular polarization antenna device 1A.

In the circular polarization antenna device 1A according to the second embodiment, the emission element is a circular or rectangular patch antenna. Two line segments connecting a connection point with the first feeding terminal 21-1-n or the second feeding terminal 21-2-n and a center point of the emission element are orthogonal to each other. As a result, the circular polarization antenna device 1A can achieve good circular polarization characteristics.

In the circular polarization antenna device 1A according to the second embodiment, the correction control amount calculating unit 33 calculates a correction control amount using the above equation (6). As a result, the circular polarization antenna device 1A can determine a correction control amount with which an axial ratio is optimally improved.

The correction control amount determining method according to the second embodiment includes: distributing, by the distribution and combination circuit 25, a high-frequency signal to the distribution and combination circuit 24-n included in each of the N antenna units, and combining, by the distribution and combination circuit 25, a high-frequency signal from the distribution and combination circuit 24-n included in each of the N antenna units; calculating, by the beam formation control amount calculating unit 32, an amplitude control amount and a phase control amount necessary for beam formation using coordinate information of the antenna element 20-n included in each of the N antenna units; calculating, by the correction control amount calculating unit 33, a correction control amount for axial ratio correction on the basis of coordinate information of the antenna element 20-n, a function representing a shape of an emission pattern of a high-frequency signal emitted from the antenna element 20-n via each of the first feeding terminal 21-1-n and the second feeding terminal 21-2-n, and a coupling amount between the first feeding terminal 21-1-n and the second feeding terminal 21-2-n; controlling, by the amplitude adjustment controlling unit 27, amplitude adjustment performed by the first amplitude adjusting circuit 22-1-n and the second amplitude adjusting circuit 22-2-n on the basis of the correction control amount; and controlling, by the phase shifter controlling unit 28, phase adjustment performed by the first phase shifter 23-1-n and the second phase shifter 23-2-n on the basis of the correction control amount. By the circular polarization antenna device 1A, which is a phased array antenna, executing this method, a high axial ratio improving effect can be obtained even in a predetermined beam scanning direction in addition to the effects described in the

first embodiment.

Third Embodiment.

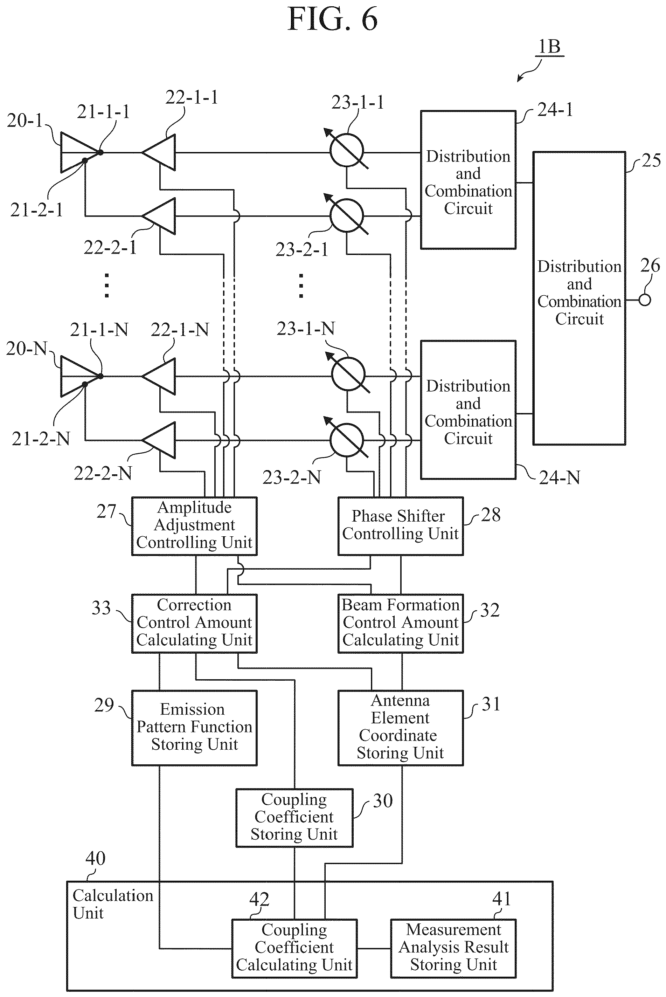

FIG. 6 is a block diagram illustrating a configuration of a circular polarization antenna device 1B according to a third embodiment. The circular polarization antenna device 1B is a so-called circular polarization phased array antenna that transmits and receives a high-frequency signal of circular polarization. When it is difficult to directly obtain a mutual coupling amount between feeding terminals stored in the coupling coefficient storing unit 30 in the circular polarization antenna device 1A described in the second embodiment, the circular polarization antenna device 1B determines the mutual coupling amount by calculation using an emission pattern measurement result or an electromagnetic field analysis result performed in advance. In FIG. 6, the same components as those in FIG. 4 are denoted by the same reference numerals, and description thereof is omitted. n is an integer from 1 to N, and N is the number of antenna elements.

The circular polarization antenna device 1B includes: N antenna units each including an antenna element 20-n, a first amplitude adjusting circuit 22-1-n, a second amplitude adjusting circuit 22-2-n, a first phase shifter 23-1-n, a second phase shifter 23-2-n, and a distribution and combination circuit 24-n; a distribution and combination circuit 25; an input and output terminal 26; an amplitude adjustment controlling unit 27; a phase shifter controlling unit 28; an emission pattern function storing unit 29; a coupling coefficient storing unit 30; an antenna element coordinate storing unit 31; a beam formation control amount calculating unit 32; a correction control amount calculating unit 33; and a calculation unit 40. The calculation unit 40 includes a measurement analysis result storing unit 41 and a coupling coefficient calculating unit 42. The antenna element 20-n includes a first feeding terminal 21-1-n and a second feeding terminal 21-2-n.

The calculation unit 40 calculates a coupling amount between a first feeding terminal $21\text{-}1\text{-}n_0$ and a second feeding terminal $21\text{-}2\text{-}n_0$ in an antenna element $20\text{-}n_0$ serving as a reference in such a manner that a difference between a sum of a function representing a shape of an emission pattern of a high-frequency signal emitted from an antenna element 20-n via each of the first feeding terminal 21-1-n and the second feeding terminal 21-2-n and a function representing a shape of an emission pattern of a radio wave caused by coupling between the first feeding terminal $21\text{-}1\text{-}n_0$ and the second feeding terminal $21\text{-}2\text{-}n_0$ in the antenna element $20\text{-}n_0$ serving as a reference and coupling between a first feeding terminal 21-1-m and a second feeding terminal 21-2-m in an antenna element 20-m adjacent to the antenna element $20\text{-}n_0$ serving as a reference, and a measurement analysis value of an emission pattern of a radio wave emitted from the reference antenna element $20\text{-}n_0$ serving as a reference is minimized.

The measurement analysis result storing unit 41 is a storage unit that stores an emission pattern measurement analysis result of a radio wave emitted from the antenna element $20\text{-}n_0$ serving as a reference among the antenna elements 20-n. The emission pattern measurement analysis result of a radio wave is, for example, a result obtained by actually measuring an emission pattern of the antenna element $20\text{-}n_0$ serving as a reference or by performing simulation using electromagnetic field analysis.

The measurement analysis result storing unit 41 is, for example, a hard disk device or a RAM.

In addition, the measurement analysis result storing unit 41 only needs to be accessible by the coupling coefficient calculating unit 42, and may be disposed outside the circular polarization antenna device 1B.

The coupling coefficient calculating unit 42 calculates a coupling amount between the first feeding terminal $21\text{-}1\text{-}n_0$ and the second feeding terminal $21\text{-}2\text{-}n_0$ in the antenna element $20\text{-}n_0$ serving as a reference.

For example, the coupling coefficient calculating unit 42 reads an emission pattern function of each feeding terminal stored in the emission pattern function storing unit 29, coordinate information of each antenna element 20-n stored in the antenna element coordinate storing unit 31, and an emission pattern measurement analysis result stored in the measurement analysis result storing unit 41. Then, using these pieces of information, the coupling coefficient calculating unit 42 calculates an amplitude and a phase of a high-frequency signal corresponding to the coupling amount between the first feeding terminal 21-1-$n_0$ and the second feeding terminal 21-2-$n_0$ in the antenna element 20-$n_0$ serving as a reference according to a correction control amount calculating equation. Furthermore, the coupling coefficient calculating unit 42 calculates an amplitude and a phase of a high-frequency signal corresponding to a coupling amount between a first feeding terminal 21-1-m and a second feeding terminal 21-2-m in M antenna elements 20-m around the first feeding terminal 21-1-$n_0$ and the second feeding terminal 21-2-$n_0$ in the antenna element 20-$n_0$ serving as a reference.

Coupling coefficient information indicating the amplitude and the phase of the high-frequency signal corresponding to the coupling amount between the feeding terminals, calculated by the coupling coefficient calculating unit 42 is stored in the coupling coefficient storing unit 30.

For example, in a case where the antenna element 20-1 is used as an antenna element serving as a reference, when power is fed to the first feeding terminal 21-1-1 at a predetermined reference amplitude and a predetermined reference phase in a spherical coordinate system with a center of the antenna element 20-1 as an origin, signals of polarization components of an electric field in $(\theta, \varphi)$ directions, emitted from the antenna element 20-1 are represented by $E_{\theta 1}(\theta, \varphi)$ and $E_{\varphi 1}(\theta, \varphi)$.

The subscript $\theta$ represents a signal of a linear polarization component in a $\theta$ direction, the subscript $\varphi$ represents a signal of a linear polarization component in a $\varphi$ direction, and these signals are signals of linear polarization components orthogonal to each other.

Furthermore, each of these signals does not include a re-emission component caused by mutual coupling with the second feeding terminal 2-2 and with an antenna element around the antenna element 20-1.

Similarly, when power is fed to the second feeding terminal 21-2-1 at a predetermined reference amplitude and a predetermined reference phase, polarization components of an electric field in $(\theta, \varphi)$ directions, emitted from the antenna element 20-1 are represented by $E_{\theta 2}(\theta, \varphi)$ and $E_{\varphi 2}(\theta, \varphi)$.

Hereinafter, in order to simplify expression, an argument $(\theta, \varphi)$ of each polarization component of an electric field is omitted.

Each of these components does not include a re-emission component caused by mutual coupling between the first feeding terminal 21-1-1 and a feeding terminal disposed in an antenna element around the antenna element 20-1.

$E_{\theta 1}$, $E_{\varphi 1}$, $E_{\theta 2}$, and $E_{\varphi 2}$ are functions of $(\theta, \varphi)$ representing a shape of an electric field emission pattern expressed by a trigonometric function, a Bessel function, or a Hankel function, and are obtained in advance by performing pattern measurement, electromagnetic field analysis, theoretical analysis, or the like. $E_{\theta 1}$, $E_{\varphi 1}$, $E_{\theta 2}$, and $E_{\varphi 2}$ are stored in the emission pattern function storing unit 29.

A coupling amount $c_{12}(1)$ is a mutual coupling amount between the first feeding terminal 21-1-1 and the second feeding terminal 21-2-1 arranged in the antenna element 20-1 serving as a reference. A coupling amount $c_{11}(m)$ is a mutual coupling amount between the first feeding terminal 21-1-1 disposed in the antenna element 20-1 and a first feeding terminal 21-1-m disposed in an antenna element 20-m around the antenna element 20-1. A coupling amount $c_{21}(m)$ is a mutual coupling amount between the first feeding terminal 21-1-1 disposed in the antenna element 20-1 and a second feeding terminal 21-2-m disposed in the antenna element 20-m around the antenna element 20-1. A coupling amount $c_{12}(m)$ is a mutual coupling amount between the second feeding terminal 21-2-1 disposed in the antenna element 20-1 and the first feeding terminal 21-1-m disposed in the antenna element 20-m around the antenna element 20-1. A coupling amount $c_{22}(m)$ is a mutual coupling amount between the second feeding terminal 21-2-1 disposed in the antenna element 20-1 and the second feeding terminal 21-2-m disposed in the antenna element 20-m around the antenna element 20-1.

Emission electric fields $E_{\theta}(\theta, \varphi)$ and $E_{\varphi}(\theta, \varphi)$ emitted from the antenna element 20-1 when power is fed to the first feeding terminal 21-1-1 and the second feeding terminal 21-2-1 arranged in the antenna element 20-1 serving as a reference at a predetermined reference amplitude and a predetermined reference phase are expressed by the following equation (8). In the following equation (8), $\Psi_m = k_0 (x_m \cos\varphi p \sin\theta + y_m \sin\varphi p \sin\theta + z_m \cos\theta)$, and $k_0$ is a wave number at an operation frequency. $(x_m, y_m, z_m)$ is position coordinates of an antenna element 20-m around the antenna element 20-1 with position coordinates of the antenna element 20-1 serving as a reference as an origin.

In addition, $c_{11}(1) = c_{22}(1) = 1$ and $c_{21}(1) = c_{12}(1)$.

$$E_\theta (\theta, \phi) = \sum_{m=1}^{M} e^{j\Psi_m} \left[ (c_{11}(m) + c_{12}(m)) E_{\theta 1} + (c_{21}(m) + c_{22}(m)) E_{\theta 2} \right]$$

$$E_\phi (\theta, \phi) = \sum_{m=1}^{M} e^{j\Psi_m} \left[ (c_{11}(m) + c_{12}(m)) E_{\phi 1} + (c_{21}(m) + c_{22}(m)) E_{\phi 2} \right]$$

$$(8)$$

The coupling coefficient calculating unit 42 obtains $c_{11}(m)$, $c_{21}(m)$, $c_{12}(m)$, and $c_{22}(m)$ that minimize an evaluation function f represented by the following equation (9) in such a manner that theoretical values of the emission electric field represented by the above equation (8) are substantially the same as $F_\theta$ and $F_\phi$ that are measurement analysis results of the emission pattern.

In the following equation (9), $(\theta_p, \varphi_q)$ represents the (p, q)-th evaluation direction, P represents an evaluation score in a $\theta$ direction, and Q represents an evaluation score in a $\varphi$ direction.

A minimization problem represented by the following equation (9) can be solved by, for example, an algorithm based on an iterative method such as a conjugate gradient method, a genetic algorithm, or a metaheuristic algorithm such as particle swarm optimization.

Operation of the circular polarization antenna device 1B other than that described above is the same as that of the circular polarization antenna device 1A, and as a result, an effect similar to that described in the second embodiment can be obtained.

$$f = \sum_{p=1}^{P} \sum_{q=1}^{Q} \left[ \left| E_\theta (\theta_p, \phi_q) - F_\theta (\theta_p, \phi_q) \right|^2 + \left| E_\phi (\theta_p, \phi_q) - F_\phi (\theta_p, \phi_q) \right|^2 \right]$$

$$(9)$$

On the basis of the measurement analysis result of the emission pattern of the antenna element $21\text{-}n_0$ serving as a reference stored in the measurement analysis result storing unit 41 and the function representing the shape of the emission pattern of each feeding terminal stored in the emission pattern function storing unit 29, the coupling coefficient calculating unit 42 calculates a coupling amount between feeding terminals that minimizes a difference between the measurement analysis result of the emission pattern and the theoretical value of the function representing the shape of the emission pattern. Here, the theoretical value of the function representing the shape of the emission pattern is a sum of a function representing a shape of an emission pattern of a high-frequency signal emitted from an antenna element 20-n via each of the first feeding terminal 21-1-n and the second feeding terminal 21-2-n and a function representing a shape of an emission pattern of a radio wave caused by coupling between the first feeding terminal $21\text{-}1\text{-}n_0$ and the second feeding terminal $21\text{-}2\text{-}n_0$ in the antenna element $20\text{-}n_0$ serving as a reference and coupling between a first feeding terminal 21-1-m and a second feeding terminal 21-2-m in an antenna element 20-m adjacent to the antenna element $20\text{-}n_0$ serving as a reference.

The correction control amount calculating unit 33 calculates a correction control amount satisfying the above equation (6) using the coupling amount calculated by the coupling coefficient calculating unit 42. As a result, the circular polarization antenna device 1B can obtain a high axial ratio improving effect in a predetermined beam scanning direction even when it is difficult to directly obtain a coupling amount between feeding terminals by measurement analysis.

Note that, although the case where the circular polarization antenna device 1B includes the calculation unit 40 has been described, the calculation unit 40 may be included in an external device disposed separately from the circular polarization antenna device 1B.

In this case, when calculating the coupling amount, the coupling coefficient calculating unit 42 included in the external device accesses the circular polarization antenna device 1B and stores the calculated coupling amount in the coupling coefficient storing unit 30 included in the circular polarization antenna device 1B.

Alternatively, the coupling coefficient storing unit 30 in the circular polarization antenna device 1B may be omitted, and the coupling coefficient calculating unit 42 may directly output the calculated coupling amount to the correction control amount calculating unit 33.

Furthermore, although the case where the circular polarization antenna device 1B is a circular polarization phased array antenna has been described, the circular polarization antenna device 1B may be a single circular polarization antenna. In this case, it is only required to set M = 1 in the above equation (9).

For example, the circular polarization antenna device 1B includes the input interface 100, the output interface 101, the processor 102, and the memory 103 as a hardware configuration illustrated in FIGS. 3A and 3B. Functions of the amplitude adjustment controlling unit 27, the phase shifter controlling unit 28, the correction control amount calculating unit 33, and the calculation unit 40 included in the circular polarization antenna device 1B are implemented by executing an information processing application in these hardware configurations.

The input interface 100 relays data read from the emission pattern function storing unit 29, the coupling coefficient storing unit 30, the antenna element coordinate storing unit 31, and the measurement analysis result storing unit 41 and outputs the data to the processor 102. The output interface 101 relays control signals output from the amplitude adjustment controlling unit 27 to the first amplitude adjusting circuit 22-1-n and the second amplitude adjusting circuit 22-2-n, and relays control signals output from the phase shifter controlling unit 28 to the first phase shifter 23-1-n and the second phase shifter 23-2-n.

An information processing application program for implementing the functions of the amplitude adjustment controlling unit 27, the phase shifter controlling unit 28, the correction control amount calculating unit 33, and the calculation unit 40 is stored in the memory 103. By the processor 102 executing the program read from the memory 103, the functions of the amplitude adjustment controlling unit 27, the phase shifter controlling unit 28, and the correction control amount calculating unit 33, and the calculation unit 40 are implemented. Note that the memory 103 is, for example, a hard disk device or a RAM.

As described above, the circular polarization antenna device 1B according to the third embodiment includes the calculation unit 40 that calculates a coupling amount between the first feeding terminal $21\text{-}1\text{-}n_0$ and the second feeding terminal $21\text{-}2\text{-}n_0$ in the antenna element $20\text{-}n_0$ serving as a reference among N antenna elements 20-n in such a manner that a difference between a sum of a function representing a shape of an emission pattern of a high-frequency signal emitted from an antenna element 20-n via each of the first feeding terminal 21-1-n and the second feeding terminal 21-2-n and a function representing a shape of an emission pattern of a radio wave caused by coupling between the first feeding terminal $21\text{-}1\text{-}n_0$ and the second feeding terminal $21\text{-}2\text{-}n_0$ in the antenna element $20\text{-}n_0$ serving as a reference and coupling between a first feeding terminal 21-1-m and a second feeding terminal 21-2-m in an antenna element 20-m adjacent to the antenna element $20\text{-}n_0$ serving as a reference, and a measurement analysis value of an emission pattern of a radio wave emitted from the reference antenna element $20\text{-}n_0$ serving as a reference is minimized.

As a result, in addition to the effects described in the first and second embodiments, the circular polarization antenna device 1B can obtain a high axial ratio improving effect in a predetermined beam scanning direction even when it is difficult to directly obtain a coupling amount between feeding terminals by measurement analysis.

Note that the above-described calculation unit 40 may be applied to the circular polarization antenna device 1 including a single antenna unit. In this case, the calculation unit 40 calculates a coupling amount between the first feeding terminal 2-1 and the second feeding terminal 2-2 in such a manner that a difference between a sum of a function representing a shape of an emission pattern of a high-frequency signal emitted via each of the first feeding terminal 2-1 and the second feeding terminal 2-2 and a function representing a shape of an emission pattern of a radio wave caused by coupling between the first feeding terminal 2-1 and the second feeding terminal 2-2, and a measurement analysis value of an emission pattern of a radio wave emitted from the antenna element 2 is minimized. By inclusion of the calculation unit 40 in the circular polarization antenna device 1, in addition to the effects described in the first embodiment, the circular polarization antenna device 1 can obtain a high axial ratio improving effect in a predetermined beam scanning direction even when it is difficult to directly obtain a coupling amount between feeding terminals by measurement analysis.

Note that the embodiments can be freely combined to each other, any component in each of the embodiments can be modified, or any component in each of the embodiments can be omitted.

INDUSTRIAL APPLICABILITY

The circular polarization antenna device according to the present disclosure can be used for, for example, satellite communication or microwave power transmission.

REFERENCE SIGNS LIST

1, 1A, 1B: circular polarization antenna device, 2, 20-1, 20-n, 20-m: antenna element, 2-1, 21-1, 21-1-n, $21\text{-}1\text{-}n_0$, 21-1-m: first feeding terminal, 2-2, 21-2, 21-2-n, $21\text{-}2\text{-}n_0$, 21-2-m: second feeding terminal, 3-1, 22-1, 22-1-n: first amplitude adjusting circuit, 3-2, 22-2, 22-2-n: second amplitude adjusting circuit, 4-1, 23-1, 23-1-n: first phase shifter, 4-2, 23-2, 23-2-n: second phase shifter, 5, 24-n, 25: distribution and combination circuit, 6, 26: input and output terminal, 7, 27: amplitude adjustment controlling unit, 8, 28: phase shifter controlling unit, 9, 29: emission pattern function storing unit, 10, 30: coupling coefficient storing unit, 11, 33: correction control amount calculating unit, 31: antenna element coordinate storing unit, 32: beam formation control amount calculating unit, 40: calculation unit, 41: measurement analysis result storing unit, 42: coupling coefficient calculating unit, 100: input interface, 101: output interface, 102: processor, 103: memory

**Claims**

1. A circular polarization antenna device comprising:

an antenna element including a first feeding terminal to transmit and receive a high-frequency signal of circular polarization and a second feeding terminal to transmit and receive a high-frequency signal of main polarization orthogonal to a main polarization component of the high-frequency signal;
a first amplitude adjusting circuit to adjust an amplitude of the high-frequency signal transmitted and received via the first feeding terminal;
a second amplitude adjusting circuit to adjust an amplitude of the high-frequency signal transmitted and received via the second feeding terminal;
a first phase shifter to adjust a phase of the high-frequency signal input to and output from the first amplitude adjusting circuit;
a second phase shifter to adjust a phase of the high-frequency signal input to and output from the second amplitude adjusting circuit;
a distribution and combination circuit to distribute the high-frequency signals to the first phase shifter and the second phase shifter, and to combine the high-frequency signals from the first phase shifter and the second phase shifter;
a correction control amount calculating unit to calculate a correction control amount for axial ratio correction on a basis of a function representing a shape of an emission pattern of the high-frequency signal emitted from the antenna element via each of the first feeding terminal and the second feeding terminal and a coupling amount between the first feeding terminal and the second feeding terminal;
an amplitude adjustment controlling unit to control amplitude adjustment performed by the first amplitude adjusting circuit and the second amplitude adjusting circuit on a basis of the correction control amount; and
a phase shifter controlling unit to control phase adjustment performed by the first phase shifter and the second phase shifter on a basis of the correction control amount.

2. The circular polarization antenna device according to claim 1, wherein

the antenna element includes: a first emission element to emit a high-frequency signal whose main polarization component is linear polarization; and a second emission element to emit a high-frequency signal whose main polarization component is linear polarization orthogonal to the linear polarization of the high-frequency signal emitted by the first emission element, the first emission element and the second emission element being arranged orthogonally to each other,
the first feeding terminal is connected to one of the first emission element and the second emission element, and the second feeding terminal is connected to the other of the first emission element and the second emission element.

3. The circular polarization antenna device according to claim 2, wherein
the first emission element and the second emission element are dipole antennas or patch antennas.

4. The circular polarization antenna device according to claim 1, wherein
the antenna element is a single emission element capable of emitting two linear polarized waves orthogonal to each other.

5. The circular polarization antenna device according to claim 4, wherein

the emission element is a circular or rectangular patch antenna, and
two line segments connecting a connection point with the first feeding terminal or the second feeding terminal and a center point of the emission element are orthogonal to each other.

6. The circular polarization antenna device according to any one of claims 1 to 5, wherein

the correction control amount calculating unit calculates the correction control amount by the following equation, in the following equation, "+" corresponds to a case where excitation is performed using a left-handed circular polarization as main polarization, and "-" corresponds to a case where excitation is performed using a right-handed circular polarization as the main polarization,
$I_1$ is a complex number representing the correction control amount set in the first amplitude adjusting circuit and the first phase shifter,

$I_2$ is a complex number representing the correction control amount set in the second amplitude adjusting circuit and the second phase shifter,

$E_{\theta 1}$ and $E_{\varphi 1}$ are functions representing shapes of emission patterns of two orthogonal linear polarized waves of the high-frequency signal emitted via the first feeding terminal,

$E_{\theta 2}$ and $E_{\varphi 2}$ are functions representing shapes of emission patterns of two orthogonal linear polarized waves of the high-frequency signal emitted via the second feeding terminal, and

c is a coupling amount between the first feeding terminal and the second feeding terminal.

$$\text{In a case where } \left| E_{\theta 1} + cE_{\theta 2} \pm jE_{\phi 1} \pm jcE_{\phi 2} \right| \geq \left| cE_{\theta 1} + E_{\theta 2} \pm jcE_{\phi 1} \pm jE_{\phi 2} \right|$$

$$\begin{cases} I_1 = -\dfrac{cE_{\theta 1} + E_{\theta 2} \pm jcE_{\phi 1} \pm jE_{\phi 2}}{E_{\theta 1} + cE_{\theta 2} + jE_{\phi 1} + jcE_{\phi 2}} & \text{(Both signs taken with the same order)} \\ \qquad I_2 = 1 \end{cases} \qquad (3)$$

$$\text{In a case where } \left| E_{\theta 1} + cE_{\theta 2} \pm jE_{\phi 1} \pm jcE_{\phi 2} \right| \leq \left| cE_{\theta 1} + E_{\theta 2} \pm jcE_{\phi 1} \pm jE_{\phi 2} \right|$$

$$\begin{cases} \qquad I_1 = 1 \\ I_2 = -\dfrac{E_{\theta 1} + cE_{\theta 2} \pm jE_{\phi 1} \pm jcE_{\phi 2}}{cE_{\theta 1} + E_{\theta 2} \pm jcE_{\phi 1} \pm jE_{\phi 2}} & \text{(Both signs taken with the same order)} \end{cases}$$

7. The circular polarization antenna device according to any one of claims 1 to 6, comprising a calculation unit to calculate a coupling amount between the first feeding terminal and the second feeding terminal in such a manner that a difference between a sum of a function representing a shape of an emission pattern of a high-frequency signal emitted from the antenna element via each of the first feeding terminal and the second feeding terminal and a function representing a shape of an emission pattern of a radio wave caused by coupling between the first feeding terminal and the second feeding terminal, and a measurement analysis value of an emission pattern of a radio wave emitted from the antenna element is minimized.

8. A circular polarization antenna device comprising a plurality of antenna units arranged, each of the antenna units including:

an antenna element including a first feeding terminal to transmit and receive a high-frequency signal of circular polarization and a second feeding terminal to transmit and receive a high-frequency signal of main polarization orthogonal to a main polarization component of the high-frequency signal;

a first amplitude adjusting circuit to adjust an amplitude of the high-frequency signal transmitted and received via the first feeding terminal;

a second amplitude adjusting circuit to adjust an amplitude of the high-frequency signal transmitted and received via the second feeding terminal;

a first phase shifter to adjust a phase of the high-frequency signal input to and output from the first amplitude adjusting circuit;

a second phase shifter to adjust a phase of the high-frequency signal input to and output from the second amplitude adjusting circuit; and

a first distribution and combination circuit to distribute the high-frequency signals to the first phase shifter and the second phase shifter, and to combine the high-frequency signals from the first phase shifter and the second phase shifter,

the circular polarization antenna device further comprising:

a second distribution and combination circuit to distribute a high-frequency signal to the first distribution and combination circuit included in each of the plurality of antenna units and to combine a high-frequency signal from the first distribution and combination circuit included in each of the plurality of antenna units;

a beam formation control amount calculating unit to calculate an amplitude control amount and a phase control amount necessary for beam formation using coordinate information of the antenna element included in each of the plurality of antenna units;

a correction control amount calculating unit to calculate a correction control amount for axial ratio correction on a basis of coordinate information of the antenna element, a function representing a shape of an emission pattern of the high-frequency signal emitted from the antenna element via each of the first feeding terminal and the second feeding terminal, and a coupling amount between the first feeding terminal and the second feeding terminal;
an amplitude adjustment controlling unit to control amplitude adjustment performed by the first amplitude adjusting circuit and the second amplitude adjusting circuit on a basis of the correction control amount; and a phase shifter controlling unit to control phase adjustment performed by the first phase shifter and the second phase shifter on a basis of the correction control amount.

9.  The circular polarization antenna device according to claim 8, wherein

the antenna element includes: a first emission element to emit a high-frequency signal whose main polarization component is linear polarization; and a second emission element to emit a high-frequency signal whose main polarization component is linear polarization orthogonal to the linear polarization of the high-frequency signal emitted by the first emission element, the first emission element and the second emission element being arranged orthogonally to each other,
the first feeding terminal is connected to one of the first emission element and the second emission element, and the second feeding terminal is connected to the other of the first emission element and the second emission element.

10. The circular polarization antenna device according to claim 9, wherein
the first emission element and the second emission element are dipole antennas or patch antennas.

11. The circular polarization antenna device according to claim 8, wherein
the antenna element is a single emission element capable of emitting two linear polarized waves orthogonal to each other.

12. The circular polarization antenna device according to claim 11, wherein

the emission element is a circular or rectangular patch antenna, and
two line segments connecting a connection point with the first feeding terminal or the second feeding terminal and a center point of the emission element are orthogonal to each other.

13. The circular polarization antenna device according to any one of claims 8 to 12, wherein

the correction control amount calculating unit calculates the correction control amount by the following equation, in the following equation, "+" corresponds to a case where excitation is performed using a left-handed circular polarization as main polarization, and "-" corresponds to a case where excitation is performed using a right-handed circular polarization as the main polarization,
$I_1$ is a complex number representing the correction control amount set in the first amplitude adjusting circuit and the first phase shifter included in each of the antenna units,
$I_2$ is a complex number representing the correction control amount set in the second amplitude adjusting circuit and the second phase shifter included in each of the antenna units,
$E_{\theta 1}$ and $E_{\varphi 1}$ are functions representing shapes of emission patterns of two orthogonal linear polarized waves of the high-frequency signal emitted via the first feeding terminal,
$E_{\theta 2}$ and $E_{\varphi 2}$ are functions representing shapes of emission patterns of two orthogonal linear polarized waves of the high-frequency signal emitted via the second feeding terminal,
i and j are integers of 1 or 2,
$c_{ij}(m)$ is a coupling amount between the j-th feeding terminal of the antenna element in the antenna unit serving as a reference and the i-th feeding terminal of the m-th antenna element among the M antenna elements around the j-th feeding terminal, $\Psi_m = k_0 (x_m \cos\varphi \sin\theta + y_m \sin\varphi \sin\theta + z_m \cos\theta)$, $k_0$ is a wave number at an operation frequency, $(x_m, y_m, z_m)$ is position coordinates of the m-th antenna element, and $(\theta, \varphi)$ is an axial ratio correction direction.

In a case where $\left| \sum_{m=1}^{M} e^{j\Psi m} \left\{ c_{1\,1}(m)E_{\theta\,1} + c_{2\,1}(m)E_{\theta\,2} \pm jc_{1\,1}(m)E_{\phi\,1} \pm jc_{2\,1}(m)E_{\phi\,2} \right\} \right| \geq$

$\left| \sum_{m=1}^{M} e^{j\Psi m} \left\{ c_{1\,2}(m)E_{\theta\,1} + c_{2\,2}(m)E_{\theta\,2} \pm jc_{1\,2}(m)E_{\phi\,1} \pm jc_{2\,2}(m)E_{\phi\,2} \right\} \right|$

$$\begin{cases} I_1 = -\dfrac{\sum_{m=1}^{M} e^{j\Psi m} \left\{ c_{1\,2}(m)E_{\theta\,1} + c_{2\,2}(m)E_{\theta\,2} \pm jc_{1\,2}(m)E_{\phi\,1} \pm jc_{2\,2}(m)E_{\phi\,2} \right\}}{\sum_{m=1}^{M} e^{j\Psi m} \left\{ c_{1\,1}(m)E_{\theta\,1} + c_{2\,1}(m)E_{\theta\,2} \pm jc_{1\,1}(m)E_{\phi\,1} \pm jc_{2\,1}(m)E_{\phi\,2} \right\}} \\ I_2 = 1 \end{cases}$$

(Both signs taken with the same order)

In a case where $\left| \sum_{m=1}^{M} e^{j\Psi m} \left\{ c_{1\,1}(m)E_{\theta\,1} + c_{2\,1}(m)E_{\theta\,2} \pm jc_{1\,1}(m)E_{\phi\,1} \pm jc_{2\,1}(m)E_{\phi\,2} \right\} \right| \leq$

$\left| \sum_{m=1}^{M} e^{j\Psi m} \left\{ c_{1\,2}(m)E_{\theta\,1} + c_{2\,2}(m)E_{\theta\,2} \pm jc_{1\,2}(m)E_{\phi\,1} \pm jc_{2\,2}(m)E_{\phi\,2} \right\} \right|$

$$\begin{cases} I_1 = 1 \\ I_2 = -\dfrac{\sum_{m=1}^{M} e^{j\Psi m} \left\{ c_{1\,1}(m)E_{\theta\,1} + c_{2\,1}(m)E_{\theta\,2} \pm jc_{1\,1}(m)E_{\phi\,1} \pm jc_{2\,1}(m)E_{\phi\,2} \right\}}{\sum_{m=1}^{M} e^{j\Psi m} \left\{ c_{1\,2}(m)E_{\theta\,1} + c_{2\,2}(m)E_{\theta\,2} \pm jc_{1\,2}(m)E_{\phi\,1} \pm jc_{2\,2}(m)E_{\phi\,2} \right\}} \end{cases}$$

(Both signs taken with the same order) $\qquad\qquad (6)$

14. The circular polarization antenna device according to any one of claims 8 to 13, comprising a calculation unit to calculate

a coupling amount between the first feeding terminal and the second feeding terminal in the antenna element serving as a reference among the plurality of antenna elements
in such a manner that a difference between a sum of a function representing a shape of an emission pattern of a high-frequency signal emitted from the antenna element via each of the first feeding terminal and the second feeding terminal and a function representing a shape of an emission pattern of a radio wave caused by coupling between the first feeding terminal and the second feeding terminal in the antenna element serving as a reference and coupling between the first feeding terminal and the second feeding terminal in the antenna element adjacent to the antenna element serving as a reference, and a measurement analysis value of an emission pattern of a radio wave emitted from the reference antenna element serving as a reference is minimized.

15. A correction control amount determining method with a circular polarization antenna device comprising:

an antenna element including a first feeding terminal to transmit and receive a high-frequency signal of circular polarization and a second feeding terminal to transmit and receive a high-frequency signal of main polarization orthogonal to a main polarization component of the high-frequency signal;
a first amplitude adjusting circuit to adjust an amplitude of the high-frequency signal transmitted and received via the first feeding terminal;
a second amplitude adjusting circuit to adjust an amplitude of the high-frequency signal transmitted and received via the second feeding terminal;
a first phase shifter to adjust a phase of the high-frequency signal input to and output from the first amplitude adjusting circuit;
a second phase shifter to adjust a phase of the high-frequency signal input to and output from the second amplitude adjusting circuit; and
a distribution and combination circuit to distribute the high-frequency signals to the first phase shifter and the second phase shifter, and to combine the high-frequency signals from the first phase shifter and the second phase shifter, the method comprising:

calculating, by a correction control amount calculating unit, a correction control amount for axial ratio correction on a basis of a function representing a shape of an emission pattern of the high-frequency signal emitted from the antenna element via each of the first feeding terminal and the second feeding terminal and a coupling amount between the first feeding terminal and the second feeding terminal;
controlling, by an amplitude adjustment controlling unit, amplitude adjustment performed by the first amplitude adjusting circuit and the second amplitude adjusting circuit on a basis of the correction control amount; and

controlling, by a phase shifter controlling unit, phase adjustment performed by the first phase shifter and the second phase shifter on a basis of the correction control amount.

16. A correction control amount determining method with a circular polarization antenna device including a plurality of antenna units arranged, each of the antenna units comprising:

an antenna element including a first feeding terminal to transmit and receive a high-frequency signal of circular polarization and a second feeding terminal to transmit and receive a high-frequency signal of main polarization orthogonal to a main polarization component of the high-frequency signal;

a first amplitude adjusting circuit to adjust an amplitude of the high-frequency signal transmitted and received via the first feeding terminal;

a second amplitude adjusting circuit to adjust an amplitude of the high-frequency signal transmitted and received via the second feeding terminal;

a first phase shifter to adjust a phase of the high-frequency signal input to and output from the first amplitude adjusting circuit;

a second phase shifter to adjust a phase of the high-frequency signal input to and output from the second amplitude adjusting circuit; and

a first distribution and combination circuit to distribute the high-frequency signals to the first phase shifter and the second phase shifter, and to combine the high-frequency signals from the first phase shifter and the second phase shifter, the method comprising:

distributing, by a second distribution and combination circuit, a high-frequency signal to the first distribution and combination circuit included in each of the plurality of antenna units, and combining, by the second distribution and combination circuit, a high-frequency signal from the first distribution and combination circuit included in each of the plurality of antenna units;

calculating, by a beam formation control amount calculating unit, an amplitude control amount and a phase control amount necessary for beam formation using coordinate information of the antenna element included in each of the plurality of antenna units;

calculating, by a correction control amount calculating unit, a correction control amount for axial ratio correction on a basis of coordinate information of the antenna element, a function representing a shape of an emission pattern of the high-frequency signal emitted from the antenna element via each of the first feeding terminal and the second feeding terminal, and a coupling amount between the first feeding terminal and the second feeding terminal;

controlling, by an amplitude adjustment controlling unit, amplitude adjustment performed by the first amplitude adjusting circuit and the second amplitude adjusting circuit on a basis of the correction control amount; and

controlling, by a phase shifter controlling unit, phase adjustment performed by the first phase shifter and the second phase shifter on a basis of the correction control amount.

# FIG. 1

# FIG. 2

START

Read Emission Pattern Function of
Each Feeding Terminal ~ ST1

Read Coupling Amount between
Feeding Terminals ~ ST2

Acquire Axial Ratio
Correction Direction and
Excitation Polarization Condition ~ ST3

Calculate
Correction Control Amount ~ ST4

Output Correction Control Amount ~ ST5

END

# FIG. 3

# FIG. 4

# FIG. 5

```
        ┌─────────────┐
        │    START    │
        └─────────────┘
               │
               ▼
┌────────────────────────────┐
│ Read Emission Pattern Function of │ ～ ST21
│      Each Feeding Terminal       │
└────────────────────────────┘
               │
               ▼
┌────────────────────────────┐
│  Read Coupling Amount between   │ ～ ST22
│       Feeding Terminals         │
└────────────────────────────┘
               │
               ▼
┌────────────────────────────┐
│ Read Antenna Element Coordinates │ ～ ST23
└────────────────────────────┘
               │
               ▼
┌────────────────────────────┐
│         Read Frequency,          │
│  Beam Scanning Direction, and   │ ～ ST24
│ Excitation Polarization Condition │
└────────────────────────────┘
               │
               ▼
┌────────────────────────────┐
│           Calculate             │ ～ ST25
│    Correction Control Amount    │
└────────────────────────────┘
               │
               ▼
┌────────────────────────────┐
│ Output Correction Control Amount │ ～ ST26
└────────────────────────────┘
               │
               ▼
        ┌─────────────┐
        │     END     │
        └─────────────┘
```

# FIG. 6

## INTERNATIONAL SEARCH REPORT

| International application No. |
|---|
| **PCT/JP2023/019038** |

### A. CLASSIFICATION OF SUBJECT MATTER

*H01Q 21/24*(2006.01)i
    FI:  H01Q21/24

According to International Patent Classification (IPC) or to both national classification and IPC

### B. FIELDS SEARCHED

Minimum documentation searched (classification system followed by classification symbols)
    H01Q21/24

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2001-267835 A (KABUSHIKI KAISHA TOSHIBA) 28 September 2001 (2001-09-28) | 1-16 |
| A | JP 2000-091842 A (NIPPON TELEGRAPH AND TELEPHONE CORPORATION) 31 March 2000 (2000-03-31) | 1-16 |
| A | JP 2004-356880 A (KYOCERA CORPORATION) 16 December 2004 (2004-12-16) | 1-16 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/019038**

| Patent document cited in search report | | | Publication date (day/month/year) | Patent family member(s) | Publication date (day/month/year) |
|---|---|---|---|---|---|
| JP | 2001-267835 | A | 28 September 2001 | (Family: none) | |
| JP | 2000-091842 | A | 31 March 2000 | (Family: none) | |
| JP | 2004-356880 | A | 16 December 2004 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5975704 A